# EUROPEAN PATENT APPLICATION

(11) **EP 3 608 443 A1**
(43) Date of publication of application: **12.02.2020**
(21) Application number: 18777579.6
(22) Date of filing: 23.03.2018
(51) Int. Cl.: C23C 28/00, C22C 21/02, C22C 38/00, C22C 38/60, C23C 2/12, C23C 2/26

(54) **Al-BASED PLATED STEEL PLATE**

(30) Priority: 27.03.2017 JP 2017061792; 27.03.2017 JP 2017061794; 27.03.2017 JP 2017061795; 27.03.2017 JP 2017061797; 27.03.2017 JP 2017061791
(71) Applicant: Nippon Steel Corporation, Tokyo 1008071 (JP)
(72) Inventor: YAMAGUCHI Shinichi, Tokyo 100-8071 (JP); MAKI Jun, Tokyo 100-8071 (JP); FUJITA Soshi, Tokyo 100-8071 (JP); YAMANAKA Shintaro, Tokyo 100-8071 (JP); KONNO Michiko, Tokyo 100-8071 (JP); TOBA Tetsuya, Tokyo 100-8071 (JP)
(74) Representative: Vossius & Partner Patentanwälte Rechtsanwälte mbB
(86) International application number: PCT/JP2018/011689
(87) International publication number: WO 2018/180979

(57) **Abstract**

A sheet includes: a base (101); an Al-plating layer (103) on at least one of opposite surfaces of the base (101); an intermediate coating layer (105) on a surface of the Al-plating layer (103); and a surface coating layer (107) formed on a surface of the intermediate coating layer (105) and containing ZnO particles (109) with a mean particle size of 0.10 µm or more and 5.00 µm or less and an organic resin (111) such that an amount of coating of the ZnO particles (109) is 0.5 g/m² or more and 10.0 g/m² or less in terms of metallic zinc. The intermediate coating layer (105) satisfies one of conditions (A) to (C):
(A) the intermediate coating layer has a thickness of 10 nm or more and 1000 nm or less and consists mainly of S, Al and O with a mass ratio [S]/[Al] of 0.0008 or more and 0.49 or less and a mass ratio [S]/[O] of 0.001 or more and 0.55 or less;
(B) the intermediate coating layer contains an oxoacid salt and has a deposition thickness of 10 nm or more and 500 nm or less; and
(C) the intermediate coating layer contains a fluorine salt and a content of fluorine is 20 mg/m² or more.

## Description

### TECHNICAL FIELD

The present invention relates to an Al-plated steel sheet suitable for hot pressing capable of exhibiting sufficient formability (lubricity), corrosion resistance (corrosion resistance of painted steel), and the like during hot pressing.

### BACKGROUND ART

There has recently been an increasing demand for reducing consumption of fossil fuel for the purpose of environmental protection and global warming reduction. Such a demand has affected a variety of manufacturing industries. The automobile industry, which provides transportation devices necessary for daily life and the like, has also been affected, so that fuel consumption has been required to be reduced by, for instance, a reduction of the weight of a vehicle body. Many automobile parts are made of iron, especially, steel sheet. A reduction in a total weight of steel sheet in use is thus important for a reduction in the weight of a vehicle body and, consequently, fuel consumption.

However, simply reducing a thickness of steel sheet is not permitted due to the necessity to ensure the safety of automobiles, so that a mechanical strength of the steel sheet needs to be maintained. Such a demand for steel sheet has been increased not only in the automobile industry but also in a variety of other manufacturing industries. Accordingly, studies and developments have been conducted on an enhancement of the mechanical strength of steel sheet to provide steel sheet whose mechanical strength can be maintained or improved even when it is thinned as compared with a typical steel sheet.

A typical material with an excellent mechanical strength tends to have lowered formability and shape freezing properties during a forming process such as bending, so that the material is difficult to form into a complicated shape. Technologies capable of overcoming such a formability problem include so-called hot pressing (also referred to as hot stamping, hot pressing, die quenching, and press hardening). In hot pressing, a material (target to be subjected to a forming process) is first heated to a high temperature (austenite range), and cooled after the steel sheet softened by heating is subjected to press forming.

Such hot pressing, in which a material is first heated to a high temperature to be softened, allows the material to be easily press-formed. Additionally, a quenching effect provided by cooling after the forming increases the mechanical strength of the material. The hot pressing can thus provide a molding article with good shape freezing properties and high mechanical strength.

However, when steel sheet is heated to, for instance, 800 °C or higher for hot pressing of the steel sheet, scale (oxide) is generated as a result of oxidization of an iron component in a surface of the steel sheet. This necessitates removal of the scale (descaling) after the hot pressing, lowering the productivity. Furthermore, in producing a molding article designed to exhibit corrosion resistance, an anti-corrosion treatment has to be performed on a surface of the molding article subsequently to hot pressing or, alternatively, surface cleaning or surface treatment has to be performed to form a metallic coating, further lowering the productivity.

Such a lowered productivity can be prevented by, for instance, forming a metallic coating on steel sheet. A typical metallic coating on steel sheet can be made of a variety of materials such as organic materials and inorganic materials. Especially, a zinc-plated steel sheet capable of sacrificial protection of steel sheet has been widely used as steel sheet for automobiles and the like in terms of anti-corrosion performance and steel sheet production technology (Patent Literature 1).

However, a heating temperature (700 °C or more and 1000 °C or less) for hot pressing is higher than decomposition temperatures for organic materials and boiling temperature of Zn (zinc). Thus, as steel sheet is heated for hot pressing, a plating layer on the surface of the steel sheet would be oxidized or evaporated, considerably impairing a surface texture and deteriorating slidability during the hot pressing. To prevent such a problem, it is necessary to, for instance, add aluminum in a predetermined range of amount to the zinc-plating layer and, additionally, form a film configured to be melted at a press temperature on the zinc-plating layer (Patent Literature 2).

Accordingly, for instance, an Al (aluminum) metallic coating, which is higher in boiling temperature than an organic material film and a Zn metallic coating, is preferably formed on steel sheet to be heated to a high temperature for hot pressing to provide a so-called Al-plated steel sheet. Formation of such an Al metallic coating prevents adhesion of scale onto a surface of steel sheet, eliminating the necessity of a descaling treatment or the like with improved productivity. The Al metallic coating also provides an anti-corrosion effect to improve corrosion resistance of painted steel.

According to a proposed method, an Al-plated steel sheet with an Al metallic coating formed on steel of a predetermined steel composition is subjected to hot pressing (see, for instance, Patent Literature 3). One of the challenges of an Al-plating material for hot pressing as disclosed in Patent Literature 3 is to improve the formability during hot pressing. There are some problems regarding the formability during hot pressing. For instance, an Fe-Al-Si plating layer generated during heating bites into a mold due to the hardness thereof or cumulates on the mold due to the large friction coefficient thereof. Such problems would result in damages on a surface of a product, impairing the appearance quality.

According to a proposed method to solve the above problems, a coating layer containing zinc oxide (ZnO) is stuck on a plating surface (see, for instance, Patent Literature 4). Specifically, the method disclosed in Patent Literature 4 includes: sticking a coating layer onto a surface of steel sheet, the coating layer containing a binder consisting of a resin component, a silane coupler, or the like so that ZnO is prevented from falling off; and volatilizing an organic solvent component of the binder at a temperature of 300 °C or more and 500 °C or less during hot pressing so that only ZnO remains. This method is said to allow voids to be generated by combustion and evaporation of the organic solvent, causing ZnO to be in point-contact with the molding metal for improved lubricity.

According to another proposed method, for instance, ZnO is applied for coating to improve temperature-rise properties during in-furnace heating or infrared heating, chemical convertibility after heat pressing, and corrosion resistance of painted steel as well as lubricity during hot pressing (see, for instance, Patent Literatures 5 to 8).

### CITATION LIST

### PATENT LITERATURE(S)

- Patent Literature 1: JP 2010-242188 A
- Patent Literature 2: JP 2011-32498 A
- Patent Literature 3: JP 2000-38640 A
- Patent Literature 4: International Publication No. WO 2009/131233
- Patent Literature 5: JP 2012-92365 A
- Patent Literature 6: JP 2013-227620 A
- Patent Literature 7: JP 2013-221202 A
- Patent Literature 8: International Publication No. WO 2014/181653

### SUMMARY OF THE INVENTION

### PROBLEM(S) TO BE SOLVED BY THE INVENTION

As disclosed in Patent Literatures 5 to 8, a surface coating layer containing ZnO formed on an Al-plating improves the slidability during hot pressing. However, studies by the inventors have proven that when an Al-plated steel sheet is heated on a conveyor for preheating and transportation prior to hot pressing, a ZnO metallic coating disappears from a stacked portion of the steel sheet in contact with the conveyor, lowering the hot slidability of this portion during hot pressing after the preheating and, consequently, making the formability (lubricity) insufficient as a whole.

In view of the above, an object of the invention is to provide an Al-plated steel sheet suitable for hot pressing capable of reducing loss of ZnO from a contact area with a conveyor during heating to provide sufficient formability (lubricity) during hot pressing, corrosion resistance (corrosion resistance of painted steel), and the like.

### MEANS FOR SOLVING THE PROBLEM(S)

[1] According to an aspect of the invention, an Al-plated steel sheet includes:
   a base;
   an Al-plating layer formed on at least one of opposite surfaces of the base;
   an intermediate coating layer formed on a surface of the Al-plating layer; and
   a surface coating layer formed on a surface of the intermediate coating layer, the surface coating layer containing ZnO particles with a mean particle size in a range of 0.10 µm or more and 5.00 µm or less, and an organic resin such that an amount of coating of the ZnO particles is in a range of 0.5 g/m² or more and 10.0 g/m² or less in terms of metallic zinc.
      The intermediate coating layer satisfies one of conditions (A) to (C) below:
      (A) the intermediate coating layer has a thickness in a range of 10 nm or more and 1000 nm or less, and consists mainly of S, Al and O with a mass ratio [S]/[Al] of S to Al being in a range of 0.0008 or more and 0.49 or less, and a mass ratio [S]/[O] of S to O being in a range of 0.001 or more and 0.55 or less;
      (B) the intermediate coating layer contains an oxoacid salt including one of or two or more of borate, silicate, sulfonate, sulfinate, permanganate, and phosphate and has a deposition thickness in a range of 10 nm or more and 500 nm or less; and
      (C) the intermediate coating layer contains a fluorine salt of at least one of aluminum, alkali metal or alkaline earth metal such that a content of fluorine is 20 mg/m² or more.
[2] In the Al-plated steel sheet of [1],
   the intermediate coating layer satisfies the conditions (A), and
   the intermediate coating layer has a thickness in a range of 20 nm or more and 400 nm or less.
[3] In the Al-plated steel sheet of [1] or [2],
   the intermediate coating layer satisfies the conditions (A),
   the mass ratio [S]/[Al] of S to Al in the intermediate coating layer is in a range of 0.005 or more and 0.1 or less, and
   the mass ratio [S]/[O] of S to O in the intermediate coating layer is in a range of 0.005 or more and 0.12 or less.
[4] In the Al-plated steel sheet of any one of [1] to [3],
   the mass ratio [S]/[Al] of S to Al in the intermediate coating layer is in a range of 0.008 or more and 0.05 or less, and
   the mass ratio [S]/[O] of S to O in the intermediate coating layer is in a range of 0.01 or more and 0.08 or less.
[5] In the Al-plated steel sheet of [1],
   the intermediate coating layer satisfies the conditions (B), and
   the oxoacid salt is selected one of or two or more of sodium borate, sodium silicate, sodium phosphate, potassium phosphate, lithium phosphate, magnesium phosphate, calcium phosphate, aluminum phosphate, zinc sulfonate, sodium sulfinate, potassium permanganate, zinc orthosilicate, lithium silicate, and zinc permanganate.
[6] In the Al-plated steel sheet of [1] or [5],
   the intermediate coating layer satisfies the conditions (B), and
   the oxoacid salt is a mixture of permanganate and silicate, which are mixed at an Mn/Si mass ratio in a range of 1 or more and 50 or less.
[7] In the Al-plated steel sheet of [1],
   the intermediate coating layer satisfies the conditions (C), and
   the intermediate coating layer contains fluorine in an amount of 2000 mg/m² or less.
[8] In the Al-plated steel sheet of [1] or [7],
   the intermediate coating layer satisfies the conditions (C), and
   the fluoride salt includes at least one or two of AlF₃, AIOF, LiF, NaF, KF, MgF₂, and CaF₂.
[9] In the Al-plated steel sheet of any one of [1] to [8], a three-layered structure including the Al-plating layer, the intermediate coating layer, and the surface coating layer is formed on each of the opposite surfaces of the base.
[10] In the Al-plated steel sheet of any one of [1] to [9], a content of Al in the Al-plating layer is, in mass%, 70% or more.
[11] In the Al-plated steel sheet of any one of [1] to [10], the base contains:
   in mass%,
   C: 0.01% or more and 0.5% or less;
   Si: 2.0% or less;
   Mn: 0.01% or more and 3.5% or less;
   P: 0.1% or less;
   S: 0.05% or less;
   Al: 0.001% or more and 0.1% or less;
   N: 0.01% or less; and
   a balance consisting of Fe and inevitable impurities.
[12] In the Al-plated steel sheet of [11], the base further contains, in mass%, one of or two or more of:
   Ti: 0.005% or more and 0.1% or less;
   B: 0.0003% or more and 0.01% or less;
   Cr: 0.01% or more and 1.0% or less;
   Ni: 0.01% or more and 5.0% or less;
   Mo: 0.005% or more and 2.0% or less; and
   Cu: 0.005% or more and 1.0% or less.

### BRIEF DESCRIPTION OF DRAWING(S)

Fig. 1 schematically illustrates a cross section of an Al-plated steel sheet according to an exemplary embodiment with a surface provided with an Al-plating layer, an intermediate coating layer, and a surface coating layer.
Fig. 2 schematically illustrates a cross section of the Al-plated steel sheet according to the exemplary embodiment with opposite surfaces each provided with the Al-plating layer, the intermediate coating layer, and the surface coating layer.

### DESCRIPTION OF EMBODIMENT(S)

Detailed description will be made below on an Al-plated steel sheet (hereinafter, occasionally simply referred to as "steel sheet") suitable for hot pressing according to an exemplary embodiment of the invention. It should be noted that the invention is by no means limited to the exemplary embodiment. Components according to the exemplary embodiment include components replaceable or easily conceivable for those skilled in the art or components substantially the same as such replaceable or easily conceivable components. Furthermore, a variety of configurations according to the exemplary embodiment may be combined by those skilled in the art as desired within a scope of obviousness.

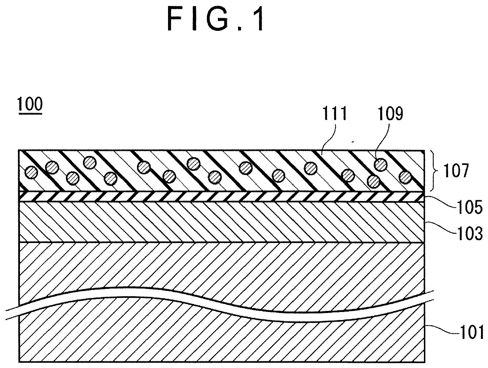

Fig. 1 illustrates an exemplary Al-plated steel sheet according to the invention. An Al-plated steel sheet 100 according to the invention includes a base 101, an Al-plating layer 103 formed on a surface of the base 101, an intermediate coating layer 105 formed on a surface of the Al-plating layer 103, and a surface coating layer 107 formed on a surface of the intermediate coating layer 105. The surface coating layer 107 contains ZnO particles 109 united by an organic resin 111.

The intermediate coating layer 105 is configured to prevent oxidation of Al in the Al-plating layer 103 and reduction of the ZnO particles 109 in the surface coating layer 107 during hot pressing. More specifically, the intermediate coating layer 105 is configured to prevent, during hot pressing, the ZnO particles 109 in the surface coating layer 107 from being reduced by Al to form Zn in the Al-plating layer 103 and, consequently, being evaporated by a high-temperature heat for the pressing.

To achieve the above effect, the intermediate coating layer 105 needs to exhibit predetermined insulating properties and oxygen barrier properties. In addition, the intermediate coating layer 105 also needs to adhere so firmly to the Al-plating layer 103 that the intermediate coating layer 105 withstands sliding for pressing. The inventors have found that the intermediate coating layer 105 meets the above demands when satisfying any one of the following conditions (A) to (E).
(A) The intermediate coating layer 105 has a thickness in a range of 10 nm or more and 1000 nm or less, and consists mainly of S, Al and O with a mass ratio [S]/[Al] of S to Al being in a range of 0.0008 or more and 0.49 or less, and a mass ratio [S]/[O] of S to O being in a range of 0.001 or more and 0.55 or less.
(B) The intermediate coating layer 105 contains an oxoacid salt including one of or two or more of borate, silicate, sulfonate, sulfinate, permanganate, and phosphate and has a deposition thickness in a range of 10 nm or more and 500 nm or less.
(C) The intermediate coating layer 105 contains a fluorine salt of at least one of aluminum, alkali metal or alkaline earth metal such that a content of fluorine is 20 mg/m² or more.
(D) The intermediate coating layer 105 contains an Al layered double hydroxide represented by a formula (1) in an amount of 10 mg/m² or more and 1000 mg/m² or less, in terms of metal M.

   [M²⁺₁₋ₓAl³⁺ₓ(OH)₂][Aⁿ⁻x/n·mH₂O]... (1)

   In the above formula, M²⁺ represents divalent metal ion (excluding Zn²⁺), Aⁿ⁻ represents a n-valent cation, x represents a positive of less than 1, n represents a cation valence, and m represents a positive.
(E) The intermediate coating layer 105 is made of a ceramics vapor deposited film of any one of Al₂O₃, ZrO₂, TiO₂, SiO₂, AIN, TiN, Si₃N₄, TiC and SiC or a composite ceramics vapor deposited film of two or more of Al₂O₃, ZrO₂, TiO₂, SiO₂, AIN, TiN, Si₃N₄, TiC and SiC, and has a thickness in a range of 10 nm or more and 1000 nm or less.

First to fifth exemplary embodiments of the invention, which implement the conditions (A) to (E), respectively, will be described below.

### First Exemplary Embodiment

First, each layer according to the first exemplary embodiment will be described below in detail. The intermediate coating layer 105 according to the first exemplary embodiment satisfies the conditions (A).

### Al-Plated Steel Sheet 100

### Base 101

The base 101 (a member for forming the Al-plating layer 103) for the Al-plated steel sheet 100 according to the first exemplary embodiment is a member capable of exhibiting an excellent mechanical strength (i.e., a variety of properties against mechanical deformation and destroy such as tensile strength, yield point, extensibility, durability during a drawing process, hardness, impact strength, endurance strength, and creep strength) during hot pressing subsequent to formation of the plating layer. For instance, a member added with C (carbon) or alloy element for enhancement of hardenability is used. As a result, an automobile part produced by hot-pressing the Al-plated steel sheet 100, which includes the Al-plating layer 103, the intermediate coating layer 105, and the surface coating layer 107 as described later, exhibits an excellent mechanical strength.

In other words, the base 101 for the Al-plated steel sheet 100 according to the first exemplary embodiment may be any typical member with an excellent mechanical strength. For instance, the base 101 may be a member containing, but not limited to, the following components.

For instance, the base 101 according to the first exemplary embodiment contains, in mass%, C: 0.01% or more and 0.5% or less, Si: 2.0% or less, Mn: 0.01% or more and 3.5% or less, P: 0.1% or less, S: 0.05% or less, Al: 0.001% or more and 0.1% or less, and N: 0.01% or less. The base 101 may selectively further contain, in mass%, one of or two or more of Ti: 0.005% or more and 0.1% or less, B: 0.0003% or more and 0.01% or less, Cr: 0.01% or more and 1.0% or less, Ni: 0.01% or more and 5.0% or less, Mo: 0.005% or more and 2.0% or less, and Cu: 0.005% or more and 1.0% or less, in addition to elements such as W, V, Nb, and Sb. Furthermore, the balance of the base 101 consists of Fe and inevitable impurities. Detailed description will be made below on components added to the base 101. A unit % of each component means mass% throughout the description below.

### C: 0.01% or more and 0.5% or less

Carbon (C), which is inevitably present in steel, is contained to ensure a desired mechanical strength of the base 101. Since an excessive reduction in the content of C increases costs for smelting, the content of C is preferably 0.01% or more. Furthermore, C contained in an amount of 0.1% or more eliminates the necessity of addition of a large amount of other alloy elements for improvement in the mechanical strength, since addition of C has a large effect in improvement in the strength. Meanwhile, C contained in an amount of more than 0.5% would cause frequent melt fracture, although the base 101 can be further hardened. Accordingly, the content of C is preferably in a range of 0.01% or more and 0.5% or less, more preferably 0.1% or more and 0.4% or less, in terms of improvement in the strength and prevention of melt fracture. It should be noted that the content of C is further preferably in a range of 0.15% or more and 0.35% or less.

### Si: 2.0% or less

Silicon (Si), which is added as a deoxidizer or the like, is an element inevitably contained in a steel-smelting process. However, an excessive addition of Si lowers ductility during hot rolling of a steel manufacturing process and, consequently, degrades the resulting surface texture, so that the content of Si is preferably 2.0% or less.

Furthermore, since Si is a reinforcing element capable of improving the mechanical strength of the base 101, Si may be added for the purpose of ensuring the desired mechanical strength as well as C. Si contained in an amount of less than 0.01% is less effective in improving the strength, so that the mechanical strength is unlikely to be sufficiently improved. Meanwhile, since Si is an oxidizable element, Si contained in an amount of more than 0.6% lowers wettability during Al-melt plating, possibly causing failure in plating. Accordingly, Si is preferably added in an amount of 0.01% or more and 0.6% or less. It should be noted that the content of Si is further preferably in a range of 0.05% or more and 0.5% or less.

### Mn: 0.01% or more and 3.5% or less

Manganese (Mn), which is added as a deoxidizer or the like, is an element inevitably contained in a steel-smelting process. However, an excessive addition of Mn impairs the uniformity of the quality due to segregation of Mn during casting, excessively hardening the steel sheet and, consequently, lowering the ductility during hot rolling and cold rolling. The content of Mn is thus preferably 3.5% or less. Meanwhile, reducing the content of Mn to less than 0.01% increases requires a process for removing Mn and increased costs, so that the content of Mn is preferably 0.01% or more. Accordingly, the content of Mn is preferably in a range of 0.01% or more and 3.5% or less.

Furthermore, Mn is an element capable of enhancing the hardenability while being a reinforcing element for the base 101. Mn is also effective in reducing the hot shortness associated with S (sulfur), which is one of the inevitable impurities, to a lower level. Thus, Mn contained in an amount of 0.5% or more can improve the hardenability and reduce the hot shortness. Meanwhile, Mn contained in an amount of more than 3% would lower the strength due to an excessive increase in residual γ phase. Accordingly, Mn is more preferably added in an amount of 0.5% or more and 3% or less. It should be noted that the content of Mn is further preferably in a range of 1% or more and 2% or less.

### P: 0.1% or less

Phosphorus (P), which is a solid-solution reinforcing element while being an inevitably contained element, is capable of improving the strength of the base 101 with relatively low costs. However, a lower limit of the content of P is preferably 0.001% in terms of economic smelting limit. Meanwhile, P contained in an amount of more than 0.1% would lower the toughness of the base 101. Accordingly, the content of P is preferably in a range of 0.001% or more and 0.1% or less. It should be noted that the content of P is further preferably in a range of 0.01% or more and 0.08% or less.

### S: 0.05% or less

Sulfur (S), which is an inevitably contained element, is present as an inclusion in the form of MnS in the base 101, functioning as the origination of destroy to impair the ductility and toughness and, consequently, deteriorate the formability. Accordingly, a lower content of S is more preferred, so that an upper limit is preferably 0.05%. Meanwhile, a reduction in the content of S possibly increases manufacturing costs, so that a lower limit of the content of S is preferably 0.001%. It should be noted that the content of S is further preferably in a range of 0.01% or more and 0.02% or less.

### Al: 0.001% or more and 0.1% or less

Aluminum (Al) is an element that impairs a plating performance while being a component contained as a deoxidizer in the base 101. Accordingly, an upper limit of the content of Al is preferably 0.1%. Meanwhile, a lower limit of the content of Al is not limited but is preferably, for instance, 0.001% in terms of economic smelting limit. It should be noted that the content of Al is further preferably in a range of 0.01% or more and 0.08% or less.

### N: 0.01% or less

Nitrogen (N), which is an inevitably contained element, is preferably contained in a fixed amount in terms of stabilization of a variety of properties of the base 101. Specifically, the content of N may be fixed with reference to respective contents of Ti, Al, and the like. Meanwhile, an excessive content of N possibly increases manufacturing costs due to an increase in the respective contents of Ti, Al, and the like, so that an upper limit of the content of N is preferably 0.01%.

One of or two or more of Ti: 0.005% or more and 0.1% or less, B: 0.0003% or more and 0.01% or less, Cr: 0.01% or more and 1.0% or less, Ni: 0.01% or more and 5.0% or less, Mo: 0.005% or more and 2.0% or less, and Cu: 0.005% or more and 1.0% or less

### Ti: 0.005% or more and 0.1% or less

Titanium (Ti) is not only a reinforcing element for the base 101 but also an element capable of improving the heat resistance of the Al-plating layer 103 formed on the surface of the base 101. Ti contained in an amount of less than 0.005% fails to sufficiently improve the strength and heat resistance. Meanwhile, Ti added in an excessive amount would form, for instance, carbide or nitride, softening the base 101. In particular, Ti contained in an amount of more than 0.1% is highly unlikely to achieve the desired mechanical strength. Accordingly, Ti is more preferably added in an amount of 0.005% or more and 0.1% or less. It should be noted that the content of Ti is further preferably in a range of 0.03% or more and 0.08% or less.

### B: 0.0003% or more and 0.01% or less

Boron (B) is an element that works during quenching, exhibiting an effect in improving the strength of the base 101.

B contained in an amount of less than 0.0003% fails to exhibit a sufficient effect in improving the strength. Meanwhile, B contained in an amount of more than 0.01% would form an inclusion (e.g., BN and carbon boride) in the base 101, increasing the shortness and, consequently, lowering fatigue strength. Accordingly, B is more preferably added in an amount of 0.0003% or more and 0.01% or less. It should be noted that the content of B is further preferably in a range of 0.001% or more and 0.008% or less.

### Cr: 0.01% or more and 1.0% or less

Chrome (Cr) has an effect in reducing generation of AIN, which causes separation of the Al-plating layer 103, in an interface between the Al-plating layer 103 and the base 101 when the Al-plating layer 103 is alloyed to form an Al-Fe alloy layer. Additionally, Cr is not only an element capable of improving wear resistance but also an element capable of enhancing hardenability. Cr contained in an amount of less than 0.01% fails to sufficiently exhibit the above effects. Meanwhile, Cr contained in an amount of more than 1.0% not only saturates the above effects but also increases the manufacturing costs of the steel sheet. Accordingly, Cr is more preferably added in an amount of 0.01% or more and 1.0% or less. It should be noted that the content of Cr is further preferably in a range of 0.5% or more and 1.0% or less.

### Ni: 0.01% or more and 5.0% or less

Nickel (Ni) has an effect in improving hardenability during hot pressing. Ni also has an effect in enhancing the corrosion resistance of the base 101. However, Ni contained in an amount of less than 0.01% fails to sufficiently exhibit the above effects. Meanwhile, Ni contained in an amount of more than 5.0% not only saturates the above effects but also increases the manufacturing costs of the steel sheet. Accordingly, Ni is more preferably added in an amount of 0.01% or more and 5.0% or less.

### Mo: 0.005% or more and 2.0% or less

Molybdenum (Mo) has an effect in improving hardenability during hot pressing. Mo also has an effect in enhancing the corrosion resistance of the base 101. However, Mo contained in an amount of less than 0.005% fails to sufficiently exhibit the above effects. Meanwhile, Mo contained in an amount of more than 2.0% not only saturates the above effects but also increases the manufacturing costs of the steel sheet. Accordingly, Mo is more preferably added in an amount of 0.005% or more and 2.0% or less.

### Cu: 0.005% or more and 1.0% or less

Copper (Cu) has an effect in improving hardenability during hot pressing. Cu also has an effect in enhancing the corrosion resistance of the base 101. Cu contained in an amount of less than 0.005% fails to sufficiently exhibit the above effects. Meanwhile, Cu contained in an amount of more than 1.0% not only saturates the above effects but also increases the manufacturing costs of the steel sheet. Accordingly, Cu is more preferably added in an amount of 0.005% or more and 1.0% or less.

### W, V, Nb, and Sb

It should be noted that in addition to the above plurality of elements, elements such as tungsten (W), vanadium (V), niobium (Nb), antimony (Sb) may be selectively added to the above base 101 according to the first exemplary embodiment. These elements may each be added in any additive amount in a known range.

### Balance

The balance of the base 101 consists of iron (Fe) and inevitable impurities. The inevitable impurities include components inherently present in a material and components naturally mixed during the manufacturing process, which are not deliberately contained in the base 101.

The base 101 containing the above components exhibits a mechanical strength of approximately 1500 MPa or more after quenched by heating for hot pressing or the like. In spite of such an excellent mechanical strength, the steel sheet can be easily press-formed by hot pressing as the steel sheet is thermally softened. Furthermore, when cooled from a high temperature after pressed, the base 101 exhibits a high mechanical strength. The mechanical strength can be maintained or improved even when the thickness is reduced for weight reduction.

### Al-Plating Layer 103

The Al-plating layer 103 is formed on at least one of opposite surfaces of the base 101. For instance, the Al-plating layer 103 is formed by, but not limited to, hot dipping. The Al-plating layer 103 is not limited as long as it consists mainly of Al. The wording "consisting mainly of Al" herein means that Al is contained in an amount of 50 mass% or more. The content of Al (the main component) is preferably 70 mass% or more, which means that Al-plating layer 103 preferably contains Al in an amount of 70 mass% or more. Components other than Al are not limited but Si may be contained in a predetermined amount.

The Al-plating layer 103 is configured to prevent corrosion of the base 101. The Al-plating layer 103 is also configured to prevent scale (oxide of iron) from being generated on the steel surface during preheating for hot pressing. Thus, the presence of the Al-plating layer 103 on at least one of opposite surfaces of the base 101 can eliminate the necessity of processes such as descaling, surface cleaning, and surface treatment and, consequently, improves the productivity of automobile parts and the like. Furthermore, since a melting point of the Al-plating layer 103 is higher than that of the metallic coating of an organic material or any other metallic material (e.g., Zn material), the Al-plating layer 103 can be processed at a high temperature during hot pressing.

It should be noted that Al contained in the Al-plating layer 103 is sometimes partly or fully alloyed with Fe in the base 101 during hot dipping or hot pressing. Thus, the Al-plating layer 103 is not always in the form of a single layer with fixed components. For instance, the Al-plating layer 103 sometimes includes a partially alloyed layer (alloy layer) or a steel-aluminum gradient alloy layer with variation in concentration gradient from the surface thereof.

### Intermediate coating layer 105

The intermediate coating layer 105 is formed on the surface of the Al-plating layer 103 for prevention of oxidation of Al in the plating layer and prevention of reduction of ZnO in the surface coating layer 107. The intermediate coating layer 105 has a thickness in a range of 10 nm or more and 1000 nm or less, and consists mainly of S, Al and O. The expression "consist mainly of" herein means that a total mass of S, Al and O accounts for 85 mass% or more of the intermediate coating layer 105. Typically, composition elements other than S, Al and O are inevitably contained elements, which originate from a raw material or are mixed during a manufacturing process.

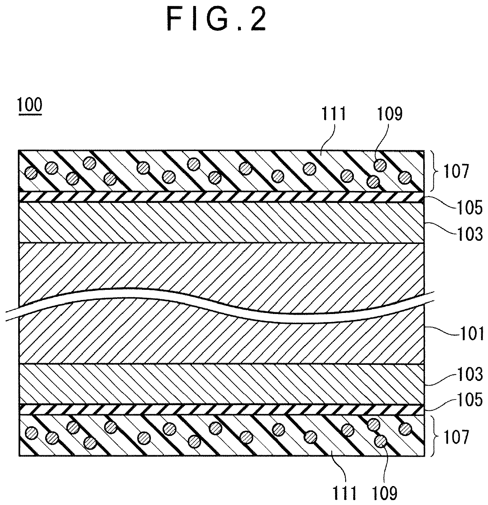

For the configuration where the Al-plating layer 103 is formed on each of the opposite surfaces of the base 101, the intermediate coating layer 105 may be formed on the Al-plating layer 103 on at least one of the opposite surfaces of the base 101. For the configuration where the Al-plating layer 103 is formed on one of the opposite surfaces of the base 101, the intermediate coating layer 105 is, of course, formed directly on this surface (see Fig. 1). Meanwhile, for the configuration where the Al-plating layer 103 is formed on each of the opposite surfaces of the base 101, the intermediate coating layer 105 is formed directly (adjacently) on the Al-plating layer 103 on each of the opposite surfaces, forming a three-layered structure of the Al-plating layer 103, the intermediate coating layer 105, and the surface coating layer 107 (see Fig. 2).

The intermediate coating layer 105 can be formed by anodizing where current is applied to the Al-plating layer 103 (anode) in an electrolyte solution containing S ions (e.g., a solution containing sulfuric acid). Alternatively, the intermediate coating layer 105 can be formed by applying aluminum sulfate (Al₂(SO₄)₃) and/or a hydrate thereof and heating it.

A primary feature of the first exemplary embodiment is that the intermediate coating layer 105 contains S in addition to Al and O. Although S is typically supposed to be contained in the intermediate coating layer 105 in the form of an S-containing Al oxide (alumina), S may be contained in the intermediate coating layer 105 in the form of a mixture of an S-containing Al oxide and another sulfate. For instance, S may be contained in the intermediate coating layer 105 in the form of aluminum sulfate or a mixture of aluminum sulfate and other sulfate It should be noted that the sulfate may be magnesium sulfate or copper sulfate. An acceptable content of elements other than S, Al and O will be described below. The intermediate coating layer 105 may be made of aluminum sulfate itself.

When the intermediate coating layer 105 does not contain S, Al₂O₃, which contains no S, is merely formed, for instance, as a result of formation of an Al oxide by atmospheric oxidation. The intermediate coating layer 105 is thus not effective in prevention of oxidation of Al in the plating layer and prevention in reduction of ZnO in the surface coating layer 107. Additionally, an Al oxide formed by anodizing in an S-free solution acquires not a dense structure but a porous Al₂O₃ layer, so that the resulting anodic oxide film is not effective in prevention of oxidation of Al and prevention of reduction of ZnO. A reason for the above has not been necessarily found, but it is supposed to be because the intermediate coating layer 105 has an increased density when containing S. For instance, when anodizing is performed in an electrolyte solution containing S ions with the Al-plating layer 103 used as an anode, a dense layer containing S is formed on the Al-plating layer 103. In view of the above, it is supposed that the intermediate coating layer 105 is densified as a result of the intermediate coating layer 105 containing S in the form of an aluminum sulfate.

Accordingly, an S content in the intermediate coating layer 105 needs to be defined. In the first exemplary embodiment, the S content in the intermediate coating layer 105 is defined such that a mass ratio [S]/[Al] (S/AI ratio) of S to Al falls within a range of 0.0008 or more and 0.49 or less, and a mass ratio [S]/[O] (S/O ratio) of S to O falls within a range of 0.001 or more and 0.55 or less. At a mass ratio [S]/[Al] of S to Al of less than 0.0008 or a mass ratio [S]/[O] of S to O of less than 0.001, the S content in the intermediate coating layer 105 becomes too small to prevent reduction of ZnO. Meanwhile, at a mass ratio [S]/[AI] of S to Al of more than 0.49 or a mass ratio [S]/[O] of S to O of more than 0.55, reduction of ZnO is not prevented, since the S content in the intermediate coating layer 105 becomes excessive and a compound formed with O or Al is easily decomposed to disappear.

Additionally, to enhance the effects in prevention of oxidation of Al in the plating layer and prevention of reduction of ZnO in the surface coating layer 107, it is preferable that respective lower limits of the S/AI ratio and the S/O ratio in the intermediate coating layer 105 are controlled. The respective lower limits of the S/AI ratio and the S/O ratio are supposed to have a correlation with the density of the intermediate coating layer 105. The S/AI ratio is preferably 0.005 or more, more preferably 0.008 or more. The S/O ratio is preferably 0.005 or more, more preferably 0.01 or more. Meanwhile, to maintain the effect of the surface coating layer 107 in improving the lubricity, it is preferable that respective upper limits of the S/AI ratio and S/O ratio are controlled. The respective upper limits of the S/AI ratio and the S/O ratio are supposed to have a correlation with the formation of the surface coating layer 107. Excessively high S/AI ratio and S/O ratio sometime cause a lot of pores to be formed in the surface coating layer 107, lowering the corrosion resistance of painted steel and/or adhesion. Accordingly, the upper limit of the S/Al ratio is preferably 0.1 or less, more preferably 0.05 or less, whereas the upper limit of the S/O ratio is preferably 0.12 or less, more preferably 0.08 or less.

The mass ratio [S]/[AI] of S to Al and the mass ratio [S]/[O] of S to O in the intermediate coating layer 105 can be calculated from a concentration conversion profile of each of Al, O and S measured in a depth direction from the surface of the Al-plated steel sheet 100 by AES (Auger Electron Spectroscopy), ESCA (Electron Spectroscopy for Chemical Analysis), or GDS (Glow Discharge Spectroscopy). In addition, in forming the intermediate coating layer 105 by anodizing, the S/O ratio can be controlled based on the conditions for anodic electrolysis, especially, the concentration of S ions contained in an electrolyte.

The intermediate coating layer 105 according to the first exemplary embodiment may contain, in addition to S, Al and O, any other component in an amount of less than remaining 15 mass%. Although the intermediate coating layer 105 according to the first exemplary embodiment is preferably made of S and alumina, the intermediate coating layer 105 sometimes contain impurities (e.g., residue of a processing solution) therein or in an interface with the surface coating layer 107. The impurities may include, Al₂O₃, AlOF, AlH₃O₃, AlO(OH), Al₂O₃ trihydrate, and Al₂O₃ monohydrate. An acceptable amount of the impurities is preferably 10 mass% or less.

The intermediate coating layer 105 with a thickness of less than 10 nm does not sufficiently function as a barrier for preventing diffusion of oxygen and thus is not effective in prevention of oxidation of Al in the plating layer and prevention of reduction of ZnO in the surface coating layer 107. Furthermore, a small residual amount of Zn results in an insufficient amount of coating of zinc phosphate provided by a chemical treatment (zinc phosphate treatment), failing to ensure film adhesion and, consequently, ensure a sufficient corrosion resistance of painted steel. Accordingly, a lower limit of the thickness of the intermediate coating layer 105 is 10 nm or more, preferably 20 nm or more. Meanwhile, when the intermediate coating layer 105 has a thickness of more than 1000 nm, weldability is impaired. Accordingly, an upper limit of the thickness of the intermediate coating layer 105 is 1000 nm or less, more preferably 400 nm or less. The thickness of the intermediate coating layer 105 can be determined by observing respective cross sections of the Al-plating layer 103, the intermediate coating layer 105, and the surface coating layer 107 formed on the surface of the Al-plated steel sheet 100 using SEM (Scanning Electron Microscope) or TEM (Transmission Electron Microscope). An interface (border) between the intermediate coating layer 105 and the Al-plating layer 103 can be clearly observed in an electro micrograph due to a contrast difference therebetween. Thus, the thickness of the intermediate coating layer 105 can be determined by measuring a distance from the intermediate coating layer 105 to the border. In forming the intermediate coating layer 105 by anodizing, the thickness can be controlled based on the conditions for anodic electrolysis, especially, current density and electrical quantity.

### Surface coating layer 107

The surface coating layer 107 contains the ZnO particles 109 with a mean particle size in a range of 0.10 µm or more and 5.00 µm or less, and the organic resin 111. An amount of coating of the ZnO particles 109 needs to be in a range of 0.5 g/m² or more and 10.0 g/m² or less, in terms of metallic zinc. It should be noted that for the configuration where the Al-plating layer 103 is formed on each of the opposite surfaces of the base 101, the surface coating layer 107 may be formed on the intermediate coating layer 105 on the Al-plating layer 103 on at least one of the opposite surfaces.

The surface coating layer 107 may be formed using, for instance, a solution prepared by blending the above components in a variety of solvents such as water and organic solvent.

### ZnO Particles 109

To achieve good formability and corrosion resistance during hot pressing, the ZnO particles 109 with a mean particle size of 0.10 µm or more and 5.00 µm or less, need to be formed on the intermediate coating layer 105 in an amount of coating of 0.5 g/m² or more and 10.0 g/m² or less, in terms of metallic zinc. The ZnO particles 109 come into point-contact with the mold with a lowered kinematic friction coefficient, thus improving formability. However, the ZnO particles 109 with a mean particle size of less than 0.10 µm fail to sufficiently improve formability due to an excessive number of contact points between the ZnO particles 109 and the mold.

Meanwhile, the ZnO particles 109 with a mean particle size of more than 5.00 µm lowers weldability. In spite of the insulating properties of ZnO, the ZnO particles 109 with a small particle size are crushed upon application of a welding pressure, ensuring sufficient power distribution points. However, when the ZnO particles 109 have a large mean particle size of more than 5 µm, the ZnO particles 109 are unlikely to be crushed upon application of a welding pressure. As a result, sufficient power distribution points cannot be ensured, so that dust is easily caused to lower weldability.

It should be noted that a method of determining the mean particle size of the ZnO particles 109 is not limited. For instance, the mean particle size may be determined by observing any ten or more of the ZnO particles 109 at 2000-fold magnification with an SEM (Scanning Electron Microscope) or the like to measure maximum particle sizes of these particles and averaging the measure maximum particle sizes. Alternatively, the mean particle size of the ZnO particles 109 may be determined using a particle size analyzer.

When the amount of coating of all the ZnO particles 109 in the surface coating layer 107 is less than 0.5 g/m² in terms of metallic zinc, sufficient formability cannot be exhibited during hot pressing. Meanwhile, with an increase in the amount of coating of the ZnO particles 109, a film electrical resistance of the surface coating layer 107 increases to lower resistance weldability (e.g., spot weldability) of the steel sheet, although formability and corrosion resistance increase. In other words, when the amount of coating of all the ZnO particles 109 in the surface coating layer 107 is more than 10.0 g/m² in terms of metallic zinc, a sufficient resistance weldability of the steel sheet is difficult to achieve.

It should be noted that the term "amount of coating" herein means an amount of coating measured before the steel sheet is set and heated on the conveyor for hot pressing.

### Organic Resin 111

For the Al-plated steel sheet 100 according to the first exemplary embodiment, the organic resin 111, which is a component of the surface coating layer 107, is not limited as long as the organic resin 111 functions as a binder capable of keeping the ZnO particles 109 within the metallic coating. The organic resin 111 is configured to be combusted to disappear during preheating for hot pressing, so that the subsequent processes, such as pressing and welding, are performed without any influence thereof. The organic resin 111 may be an aqueous chemical agent. In this case, for instance, a cation resin, which is mildly alkaline and stable as well as ZnO, is preferably usable and examples of the cation resin include cationic urethane resin and cationic acrylic resin. It should be noted that a ratio of the concentration (g/kg) of the organic resin in the chemical agent is not limited according to the first exemplary embodiment. Exemplary resins usable as the organic resin 111 according to the first exemplary embodiment of the invention include a cationic urethane resin (manufactured by DKS Co. Ltd., trade name: SUPERFLEX 650).

To allow the organic resin 111 to sufficiently function as a binder, the content of the organic resin 111 with respect to the surface coating layer 107 as a whole is preferably in a range of, in mass%, 10% or more and 60% or less. At a content of less than 10%, the organic resin 111 fails to sufficiently function as a binder, so that the metallic coating is easy to separate before preheating. It should be noted that the content of the organic resin 111 is preferably 15% or more so that the organic resin 111 stably functions as a binder. Meanwhile, a content of the organic resin 111 of more than 60% results in unignorable emission of unpleasant odor.

It should be noted that the amount of coating of the ZnO particles 109 on the Al-plating layer 103 may be measured by a calibration curve method using XRF (X-ray Fluorescence).

The intermediate coating layer 105 and the surface coating layer 107 may be formed on the Al-plating layer 103 in any method. The intermediate coating layer 105 can be formed by performing anodizing in a solution containing S ions. Alternatively, the solution containing S ions may be applied and heated. In forming the intermediate coating layer 105 by anodizing, the thickness can be controlled based on the conditions for anodic electrolysis, especially, electrical quantity. In forming the intermediate coating layer 105 by a heat treatment, the thickness of the intermediate coating layer 105 can be controlled based on heating temperature and/or heat-retention time. The S/O ratio of the intermediate coating layer 105 can be controlled based on the concentration of the S ions in the solution. The surface coating layer 107 can be formed by applying an aqueous solution or a solvent where the main components are dissolved on the Al-plating layer 103 by a typical device such as roll coater and spray, and drying it.

Regarding the concentration of the electrolyte, for anodizing using a sulfuric acid solution, a sulfuric acid aqueous solution with a concentration in a range of 1 vol% or more and 10 vol% or less, with respect to the solvent is useable. The surface coating layer 107 can also be formed by burning an aluminum sulfate aqueous solution. In this case, the concentration of the aluminum sulfate aqueous solution is preferably in a range of 20 vol% or more and 35 vol% or less, with respect to the solvent and an application amount thereof is preferably in a range of 0.5 ml/m² or more and 5 ml/m² or less. For anodizing using an acid solution, a current density may be in a range of 10 mA/cm² or more and 500 mA/cm² or less, and an electrical quantity may be in a range of 15 C or more and 1500 C (coulomb) or less.

For forming the surface coating layer 107, the applied solution may be dried by, but not limited to, a variety of techniques such as hot-air heating, IH (Induction Heating), NIR (Near InfraRed) heating, and resistance heating. Moreover, a heating temperature for drying is preferably determined as desired, considering a glass transition temperature (Tg) of the organic resin 111 (binder).

As described above, the Al-plated steel sheet 100 (steel sheet) according to the first exemplary embodiment, which includes the surface coating layer 107 and the intermediate coating layer 105, exhibits an excellent lubricity during hot pressing without loss of the ZnO metallic coating at the contact area with the conveyor and, consequently, exhibits excellent formability during the hot pressing, excellent corrosion resistance after the hot pressing, and the like. Furthermore, the Al-plated steel sheet 100 according to the first exemplary embodiment is less adhesive to a mold due to the presence of the highly lubricative surface coating layer 107. If the Al-plating layer 103 is accidentally powdered by heating, adhesion of the powder (e.g., Al-Fe powder) to a mold used for subsequent pressing would be reduced by the presence of the highly lubricative surface coating layer 107. Thus, the Al-plated steel sheet 100 according to the first exemplary embodiment can be hot-pressed without the necessity of removal of Al-Fe powder adhering to the mold, achieving excellent productivity.

### Second Exemplary Embodiment

Next, each layer according to the second exemplary embodiment will be described below in detail. The intermediate coating layer 105 according to the second exemplary embodiment satisfies the conditions (B).

### Base 101

The base 101 for the Al-plated steel sheet 100 according to the second exemplary embodiment is a member capable of exhibiting an excellent mechanical strength (i.e., a variety of properties against mechanical deformation and destroy such as tensile strength, yield point, extensibility, durability during a drawing process, hardness, impact strength, endurance strength, and creep strength) during hot pressing subsequent to formation of the plating layer. For instance, a member added with C (carbon) or alloy element for enhancement of hardenability is used. As a result, an automobile part produced by hot-pressing a steel sheet including the Al-plating layer 103 and the surface coating layer 107 exhibits an excellent mechanical strength.

The base 101 according to the second exemplary embodiment may be any typical member with an excellent mechanical strength. For instance, the base 101 may be a member having, but not limited to, the same composition as that of the first exemplary embodiment.

### Al-Plating Layer 103

The Al-plating layer 103 is formed on at least one of opposite surfaces of the base 101. The Al-plating layer 103 may be formed in the same manner and have the same composition as in the first exemplary embodiment.

### Intermediate coating layer 105

The intermediate coating layer 105 is formed on a surface of the Al-plating layer 103, functioning as an oxidizer. The intermediate coating layer 105 necessarily contains an oxoacid salt including one of or two or more of borate, silicate, sulfonate, sulfinate, permanganate, and phosphate and has a deposition thickness in a range of 10 nm or more and 500 nm or less. For the configuration where the Al-plating layer 103 is formed on each of the opposite surfaces of the base 101, the intermediate coating layer 105 may be formed on the surface of the Al-plating layer 103 on at least one of the opposite surfaces of the base 101. The intermediate coating layer 105 may be formed by applying a solution prepared by dissolving the above components in a variety of solvents such as water and organic solvent and drying the solution. The intermediate coating layer 105 preferably consists mainly of an oxoacid salt (more than 50 mass%). More preferably, the intermediate coating layer 105 consists of an oxoacid salt and inevitable impurities.

When the deposition thickness of the intermediate coating layer 105 is less than 10 nm, the Al-plating layer 103 has a portion in contact with the ZnO particles 109 in the surface coating layer 107. Thus, loss of ZnO cannot be reduced during hot pressing. In addition, the corrosion resistance is lowered. Meanwhile, when the deposition thickness of the intermediate coating layer 105 is more than 500 nm, the mechanical strength of the intermediate coating layer 105 is lowered due to an increase in volume contraction during formation of the metallic coating, lowering coating adhesion. The deposition thickness (film thickness) of the intermediate coating layer 105 may be determined by observing a cross section of the intermediate coating layer 105 using a scanning electron microscope and averaging thicknesses measured at any ten spots in the intermediate coating layer 105 as the film thickness.

### Oxoacid Salt

The intermediate coating layer 105, which contains an oxoacid salt including one of or two or more of borate, silicate, sulfonate, sulfinate, permanganate, and phosphate, is in the form of a uniform film when formed, preventing the Al-plating layer 103 from being in contact with ZnO (ZnO particles 109) contained in the surface coating layer 107. Moreover, the oxoacid salt contained in the intermediate coating layer 105 also functions as an oxidizer, promoting oxidation of Al during heating for hot pressing to reduce loss of ZnO resulting from reduction.

To further enhance the effect in reducing loss of ZnO, the oxoacid salt needs to include one of or two or more of borate, silicate, sulfonate, sulfinate, permanganate, and phosphate. Among the above, permanganate is considerably effective as an oxidizer but exhibits poor adhesion to the base, whereas silicate is less effective as an oxidizer than permanganate but exhibits excellent adhesion to the base. Thus, a mixture of permanganate and silicate in an appropriate ratio can achieve not only prevention of loss of ZnO but also adhesion of the film to the base at a high level. The research by the inventors has proven that mixing permanganate and silicate in an Mn/Si mass ratio (mixing ratio) in a range of 1 or more and 50 or less, achieves a considerably good balance between the effect in prevention of loss of ZnO and adhesion. The variety of oxoacid salts can be identified by XRD (X-Ray Diffraction) and an Mn/Si ratio is calculated from the results of measurement by a calibration curve method using a fluorescent XRF (X-Ray Analyzer).

Examples of the oxoacid salt include, but not exhaustive, sodium borate, sodium silicate, sodium phosphate, potassium phosphate, lithium phosphate, magnesium phosphate, calcium phosphate, aluminum phosphate, zinc sulfonate, sodium sulfinate, potassium permanganate, zinc orthosilicate, lithium silicate, and zinc permanganate.

### Surface coating layer 107

The surface coating layer 107 contains the ZnO particles 109 with a mean particle size in a range of 0.10 µm or more and 5.00 µm or less, and the organic resin 111. An amount of coating of the ZnO particles 109 needs to be in a range of 0.5 g/m² or more and 10.0 g/m² or less, in terms of metallic zinc. It should be noted that for the configuration where the Al-plating layer 103 is formed on each of the opposite surfaces of the base 101, the surface coating layer 107 may be formed on the surface of the intermediate coating layer 105 on the Al-plating layer 103 on at least one of the opposite surfaces.

The surface coating layer 107 may be formed using, for instance, a solution prepared by blending the above components in a variety of solvents such as water and organic solvent.

### ZnO Particles 109

To achieve good formability and corrosion resistance during hot pressing, the ZnO particles 109 with a mean particle size of 0.10 µm or more and 5.00 µm or less, need to be formed on the surface of the Al-plating layer 103 in an amount of coating of 0.5 g/m² or more and 10.0 g/m² or less, in terms of metallic zinc. The ZnO particles 109 come into point-contact with the mold with a lowered sliding friction coefficient, thus improving formability. However, the ZnO particles 109 with a mean particle size of less than 0.10 µm fail to sufficiently improve formability due to an excessive number of contact points between the ZnO particles 109 and the mold.

Meanwhile, ZnO is an insulating body and the ZnO particles 109 with a mean particle size of more than 5.00 µm is unlikely to be crushed upon application of a welding pressure. Thus, sufficient power distribution points cannot be ensured, so that dust is easily caused to lower weldability.

It should be noted that a method of determining the mean particle size of the ZnO particles 109 is not limited. For instance, the mean particle size may be determined by observing any ten or more of the ZnO particles 109 at 2000-fold magnification with an SEM (Scanning Electron Microscope) or the like to measure particle sizes of these particles and averaging the particle sizes. Alternatively, the mean particle size of the ZnO particles 109 may be determined using a particle size analyzer.

When the amount of coating of all the ZnO particles 109 in the surface coating layer 107 is less than 0.5 g/m² in terms of metallic zinc, sufficient formability cannot be exhibited during hot pressing. Meanwhile, with an increase in the amount of coating of the ZnO particles 109, a film resistance of the surface coating layer 107 increases to lower resistance weldability (e.g., spot weldability) of the steel sheet, although formability and corrosion resistance increase. In other words, when the amount of coating of all the ZnO particles 109 in the surface coating layer 107 is more than 10.0 g/m² in terms of metallic zinc, a sufficient resistance weldability of the steel sheet is difficult to achieve.

The amount of coating of the ZnO particles 109 on the Al-plating layer 103 may be measured by a calibration curve method using XRF (X-ray Fluorescence).

### Organic Resin 111

For the steel sheet according to the second exemplary embodiment, the organic resin 111, which is a component of the surface coating layer 107, is not limited as long as the organic resin 111 functions as a binder capable of keeping the ZnO particles 109 within the surface coating layer 107. The organic resin 111 is configured to be combusted to disappear during preheating for hot pressing, so that the subsequent processes, such as pressing and welding, are performed without any influence thereof. The organic resin 111 may be an aqueous chemical agent. In this case, for instance, a cation resin, which is mildly alkaline and stable as well as ZnO, is preferably usable and examples of the cation resin include cationic urethane resin and cationic acrylic resin. It should be noted that a ratio of the concentration (g/kg) of the organic resin in the chemical agent is not limited according to the second exemplary embodiment.

To allow the organic resin 111 to sufficiently function as a binder, the content of the organic resin 111 with respect to the surface coating layer 107 as a whole is preferably in a range of, in mass%, 10% or more and 60% or less. At a content of less than 10%, the organic resin 111 fails to sufficiently function as a binder, so that the metallic coating is easy to separate before preheating. It should be noted that the content of the organic resin 111 is preferably 15% or more so that the organic resin 111 stably functions as a binder. Meanwhile, a content of the organic resin 111 of more than 60% results in unignorable emission of odor.

Each of the intermediate coating layer 105 and the surface coating layer 107 may be formed on the Al-plating layer 103 by, but not limited to, a method including: preparing a solution or solvent where the above main components are dissolved; applying this solution or solvent on the surface of the Al-plating layer 103 using a known device such as roll coater and spray; and drying the applied solution or solvent. The applied solution or solvent may be dried by, but not limited to, a variety of techniques such as hot-air heating, IH (Induction Heating), NIR (Near InfraRed) heating, and resistance heating. Moreover, a heating temperature for drying is preferably determined as desired, considering a glass transition temperature (Tg) of the organic resin 111 (binder).

As described above, the Al-plated steel sheet 100 according to the second exemplary embodiment, which includes the surface coating layer 107 and the intermediate coating layer 105, exhibits an excellent lubricity during hot pressing without loss of ZnO at the contact area with the conveyor and, consequently, exhibits excellent formability during the hot pressing, excellent corrosion resistance after the hot pressing, and the like. Furthermore, the steel sheet according to the second exemplary embodiment is less adhesive to a mold due to the presence of the highly lubricative surface coating layer 107. If the Al-plating layer 103 is accidentally powdered by heating, adhesion of the powder (e.g., Al-Fe powder) to a mold used for subsequent pressing would be reduced by the presence of the highly lubricative surface coating layer 107. Thus, the steel sheet according to the second exemplary embodiment can be hot-pressed without the necessity of removal of Al-Fe powder adhering to the mold, achieving excellent productivity.

### Third Exemplary Embodiment

Next, each layer according to the third exemplary embodiment will be described below in detail. The intermediate coating layer 105 according to the third exemplary embodiment satisfies the conditions (C).

### Base 101

The base 101 for the Al-plated steel sheet 100 according to the third exemplary embodiment is a member capable of exhibiting an excellent mechanical strength (i.e., a variety of properties against mechanical deformation and destroy such as tensile strength, yield point, extensibility, durability during a drawing process, hardness, impact strength, endurance strength, and creep strength) during hot pressing subsequent to formation of the plating layer. For instance, a member added with C (carbon) or alloy element for enhancement of hardenability is used. As a result, an automobile part produced by hot-pressing a steel sheet including the Al-plating layer 103 and the surface coating layer 107 exhibits an excellent mechanical strength.

The base 101 for the steel sheet according to the third exemplary embodiment may be any typical member with an excellent mechanical strength. For instance, the base 101 may be a member having, but not limited to, the same composition as that of the first exemplary embodiment.

### Al-Plating Layer 103

The Al-plating layer 103 is formed on at least one of opposite surfaces of the base 101. The Al-plating layer 103 may be formed in the same manner and have the same composition as in the first exemplary embodiment.

### Intermediate Coating Layer 105

On the surface of the Al-plating layer 103, the intermediate coating layer 105 is formed that is made of a fluorine salt of at least one of aluminum, alkali metal or alkaline earth metal. The intermediate coating layer 105 may be formed using, for instance, a solution prepared by blending the components in a variety of solvents such as water and organic solvent.

Specific examples of the fluoride salt include, but not limited to, one of or two or more of AlF₃, AlOF, LiF, NaF, KF, MgF₂, and CaF₂.

When the intermediate coating layer 105 is made of a fluoride salt of aluminum, alkali metal and/or alkaline earth metal, the intermediate coating layer 105 is in the form of a uniform film when formed, eliminating a portion of Al-plating layer 103 that is in contact with ZnO in the surface coating layer 107 and, consequently, reducing loss of ZnO during heating for hot pressing.

It should be noted that when the intermediate coating layer 105 is made of a fluoride salt of a substance other than aluminum, alkali metal, and alkaline earth metal, the intermediate coating layer 105 reacts with the Al-plating layer 103 during heating for hot stamping, losing the film uniformity. Thus, loss of ZnO would not be reduced due to the presence of a portion of the Al-plating layer 103 in contact with ZnO.

The fluoride salt contained in the intermediate coating layer 105 contributes to the uniformity of the intermediate coating layer 105. When fluorine (F) is contained in the intermediate coating layer 105 in an amount (also referred to as "amount of coating") of 20 mg/m² or more, sufficient lubricity and corrosion resistance can be achieved.

Meanwhile, as the amount of fluoride salt is increased, lubricity and corrosion resistance are increased but spot weldability is reduced with a reduction in the electrical resistance of the film. When the intermediate coating layer 105 contains fluorine (F) in an amount of 2000 mg/m² or less, sufficient spot weldability can be achieved.

The amount of fluorine (F) can be measured by a calibration curve method using an electron probe micro analyzer.

It should be noted that the fluoride salt contained in the intermediate coating layer 105 preferably contains fluorine (F) in an amount in a range of 100 mg/m² or more and 1000 mg/m² or less, to achieve the above effects at a higher level.

### Surface Coating Layer 107

The surface coating layer 107 contains the ZnO particles 109 with a mean particle size in a range of 0.10 µm or more and 5.00 µm or less, and the organic resin 111. An amount of coating of the ZnO particles 109 needs to be in a range of 0.5 g/m² or more and 10.0 g/m² or less, in terms of metallic zinc. It should be noted that for the configuration where the Al-plating layer 103 is formed on each of the opposite surfaces of the base 101, the surface coating layer 107 may be formed on the surface of the intermediate coating layer 105 on the Al-plating layer 103 on at least one of the opposite surfaces.

The surface coating layer 107 may be formed using, for instance, a solution prepared by blending the above components in a variety of solvents such as water and organic solvent.

### ZnO Particles 109

The ZnO particles 109 come into point-contact with the mold with a lowered kinematic friction coefficient, thus improving formability. However, the ZnO particles 109 with a mean particle size of less than 0.10 µm fail to sufficiently improve formability due to an excessive number of contact points between the ZnO particles 109 and the mold.

Meanwhile, ZnO is an insulating body and the ZnO particles 109 with a mean particle size of more than 5.00 µm is unlikely to be crushed upon application of a welding pressure. Thus, sufficient power distribution points cannot be ensured, so that dust is easily caused to lower weldability.

Accordingly, the mean particle size of the ZnO particles 109 is preferably in a range of 0.10 µm or more and 5.00 µm or less.

It should be noted that a method of determining the mean particle size of the ZnO particles 109 is not limited. For instance, the mean particle size may be determined by observing any ten or more of the ZnO particles 109 at 2000-fold magnification with an SEM (Scanning Electron Microscope) or the like to measure particle sizes of these particles and averaging the particle sizes. Alternatively, the mean particle size of the ZnO particles 109 may be determined using a particle size analyzer.

Furthermore, since a predetermined amount of the ZnO particles 109 needs to be ensured to enhance the formability for hot pressing, the Zn content (also referred to as "amount of coating") is preferably 0.5 g/m² or more.

Meanwhile, an increase in the amount of the ZnO particles 109 not only increases the electrical resistance of the film but also increases lubricity and corrosion resistance. Thus, to ensure spot weldability, an upper limit of the amount of the ZnO particles 109 is preferably 10.0 g/m² in terms of Zn content.
It should be noted that an amount of the ZnO particles 109 in a range of 1.0 g/m² or more and 7.0 g/m² or less, in terms of Zn content is further preferable, since each of the above effects is exhibited at a much higher level.

It should also be noted that the term "the amount of the ZnO particles 109" herein means an amount of coating measured before the steel sheet is heated on the conveyor for hot pressing.

The amount of coating of the ZnO particles 109 may be measured by a calibration curve method using XRF (X-ray Fluorescence).

### Organic Resin 111

The surface coating layer 107 contains the organic resin 111 as described above. The organic resin 111 is not limited as long as it functions as a binder capable of keeping ZnO within the surface coating layer 107. The organic resin 111 is configured be combusted to disappear during preheating for hot pressing, so that the subsequent processes, such as pressing and welding, are performed without any influence thereof. The organic resin 111 may be replaced by an aqueous chemical agent. In this case, for instance, a cation resin, which is mildly alkaline and stable as well as ZnO, is desirably usable and examples of the cation resin include cationic urethane resin and cationic acrylic resin. It should be noted that a ratio of the concentration (g/kg) of the organic resin in the chemical agent is not limited according to the third exemplary embodiment.

To allow the organic resin 111 to sufficiently function as a binder, the content of the organic resin 111 with respect to the surface coating layer 107 as a whole is preferably in a range of, in mass%, 10% or more and 60% or less.

At a content of less than 10%, the organic resin 111 fails to sufficiently function as a binder, so that the metallic coating is easy to separate before preheating. In other words, at a content of the resin 111 of 10% or more (mass ratio), the resin 111 can stably function as a binder. Meanwhile, a content of the resin 111 of more than 60% (mass ratio) is not preferable, since unignorable odor is caused during heating.

A method of forming the surface coating layer 107 is not limited. For instance, the surface coating layer 107 may be formed by applying a solution prepared by blending the above components in a variety of solvents, such as water and organic solvent, to the surface of the intermediate coating layer using a known device (e.g., roll coater and spray) and drying it. The applied solution may be dried by, but not limited to, a variety of techniques such as hot-air heating, IH (Induction Heating), NIR (Near InfraRed) heating, and resistance heating. It should be noted that a heating temperature for drying is preferably determined as desired, considering a glass transition temperature (Tg) of the resin 111 (binder).

As described above, the Al-plated steel sheet 100 according to the third exemplary embodiment exhibits an excellent lubricity during hot pressing without loss of ZnO at the contact area of the surface coating layer 107 with the conveyor and, consequently, exhibits excellent formability during the hot pressing, excellent corrosion resistance after the hot pressing, and the like. Furthermore, the steel sheet according to the third exemplary embodiment is less adhesive to a mold due to the presence of the highly lubricative surface coating layer 107. If the Al-plating layer 103 is accidentally powdered by heating, adhesion of the powder (e.g., Al-Fe powder) to a mold used for subsequent pressing would be reduced by the presence of the highly lubricative surface coating layer 107. Thus, the steel sheet according to the third exemplary embodiment can be hot-pressed without the necessity of removal of Al-Fe powder adhering to the mold, achieving excellent productivity.

### Fourth Exemplary Embodiment

Next, each layer according to the fourth exemplary embodiment will be described below in detail. The intermediate coating layer 105 according to the fourth exemplary embodiment satisfies the conditions (D).

### Base 101

The base 101 for the Al-plated steel sheet 100 according to the fourth exemplary embodiment is a member configured to exhibit an excellent mechanical strength (i.e., a variety of properties against mechanical deformation and destroy such as tensile strength, yield point, extensibility, durability during a drawing process, hardness, impact strength, endurance strength, and creep strength) during hot pressing subsequent to formation of the plating layer. For instance, a member added with C (carbon) or alloy element for enhancement of hardenability is used. As a result, an automobile part produced by hot-pressing a steel sheet including the Al-plating layer 103, the intermediate coating layer 105 and the surface coating layer 107 exhibits an excellent mechanical strength.

The base 101 for the steel sheet according to the fourth exemplary embodiment may be any typical member with an excellent mechanical strength. For instance, the base 101 may be a member having, but not limited to, the same composition as that of the first exemplary embodiment.

### Al-Plating Layer 103

The Al-plating layer 103 is formed on at least one of opposite surfaces of the base 101. The Al-plating layer 103 may be formed in the same manner and have the same composition as in the first exemplary embodiment.

### Intermediate coating layer 105

The intermediate coating layer 105 is formed on the surface of the Al-plating layer 103 for prevention of oxidation of Al in the Al-plating layer 103 and prevention of reduction of ZnO in the surface coating layer 107. The intermediate coating layer 105 needs to contain an Al layered double hydroxide represented by a formula (1) below in an amount of 10 mg/m² or more and 1000 mg/m² or less, in terms of metal M.

[M²⁺₁₋ₓAl³⁺x(OH)₂][Aⁿ⁻_{x/n}·mH₂O]... (1)

In the formula (1), M²⁺ represents a divalent metal ion and Aⁿ⁻ represents an n-valent anion.

A is not limited to a single element but may include a plurality of elements. When A includes a plurality of elements, these element do not necessarily have the same valence. In this case, n in the formula (1) is in a range of 1 or more and 3 or less.

A layered double hydroxide is typically a double hydroxide where a trivalent metal ion is solid-solute in a divalent metal hydroxide, that is, a compound with a layered structure where anions are held between layers of the hydroxide. The Al layered double hydroxide contains trivalent metal ion in the form of Al and any divalent metal ion M²⁺.

For the configuration where the Al-plating layer 103 is formed on each of the opposite surfaces of the base 101, the intermediate coating layer 105 may be formed on the surface of the plating layer on at least one of the opposite surfaces of the base 101. For instance, the intermediate coating layer 105 can be formed by applying a solution where the above components (Al³⁺, M²⁺, Aⁿ⁻) are contained in a variety of solvents (e.g., water and organic solvent) on the Al-plating layer 103 and drying it, or by dipping the Al-plated steel sheet 100 in an alkaline solution containing M²⁺ ion and Aⁿ⁻ ion and then rinsing and drying it.

x in the formula (1) is a positive of less than 1. For instance, x is 1/3, more preferably in a range of 1/5 or more and 1/3 or less.

Furthermore, m in the formula (1) is a positive. For instance, m is 2/3, more preferably in a range of 2/3 or more and 2 or less.

The intermediate coating layer 105 according to the fourth exemplary embodiment may contain other components as needed in addition to the Al layered double hydroxide. Although the intermediate coating layer 105 according to the fourth exemplary embodiment is preferably made of the Al layered double hydroxide, the intermediate coating layer 105 sometimes contain impurities (e.g., residue of a processing solution) therein or in an interface with the surface coating layer 107.

When the intermediate coating layer 105 contains the Al layered double hydroxide in an amount of less than 10 mg/m² in terms of metal M, the Al-plating layer 103 has a portion in contact with the ZnO particles 109 in the surface coating layer 107. Thus, loss of ZnO cannot be reduced during hot pressing. Meanwhile, when the intermediate coating layer 105 contains the Al layered double hydroxide in an amount of more than 1000 mg/m² in terms of metal M, contact resistance is increased to lower spot weldability.

The amount of the layered double hydroxide contained in the intermediate coating layer 105 in terms of metal M is hereinafter sometimes referred to as an amount of coating of the intermediate coating layer 105 in terms of metal M. The amount of coating of the intermediate coating layer 105 in terms of metal M can be measured by a calibration curve method based on fluorescent X-ray analysis. It can be confirmed by wide-angle XRD (X-Ray Diffraction) analysis whether the intermediate coating layer 105 is made of an Al layered double hydroxide.

Examples of the metal ion M²⁺ in the Al layered double hydroxide include alkaline earth metal ions, Fe²⁺, Ni²⁺, Co²⁺, and Cu²⁺ and preferable examples thereof include metal ions and alkaline earth metal ions in group 2 to group 11. Aⁿ⁻, which may include hydroxyl group (OH⁻) and anions other than OH⁻, preferably includes one of or two or more of chloride ion, sulfuric acid ion, and carbonic acid ion. When M²⁺ is an alkaline earth metal ion and Aⁿ⁻ includes one of or two or more of chloride ion, sulfuric acid ion, and carbonic acid ion, the density is increased to further reduce oxidation of Al contained in the Al-plating layer 103. It should be noted that Zn²⁺ is excluded from examples of M²⁺, since the Al layered double hydroxide is easily decomposed into ZnO and ZnAl₂O₄ by heating when M²⁺ is Zn²⁺, making it impossible to maintain a structure forming the layered double hydroxide.

Furthermore, a composition (Ca₂Al(OH)₆Cl·2H₂O) where the metal ion M²⁺ in the Al layered double hydroxide is a calcium ion and the anion is a chloride ion is preferable, since this composition most greatly improves the density of the intermediate coating layer 105, preventing reduction of ZnO and oxidation of Al.

### Surface Coating Layer 107

The surface coating layer 107 contains the ZnO particles 109 with a mean particle size in a range of 0.10 µm or more and 5.00 µm or less, and the organic resin 111. An amount of coating of the ZnO particles 109 needs to be in a range of 0.5 g/m² or more and 10.0 g/m² or less, in terms of metallic zinc. It should be noted that for the configuration where the Al-plating layer 103 is formed on each of the opposite surfaces of the base 101, the surface coating layer 107 may be formed on the surface of the intermediate coating layer 105 on the Al-plating layer 103 on at least one of the opposite surfaces.

The surface coating layer 107 may be formed using, for instance, a solution prepared by blending the above components in a variety of solvents such as water and organic solvent.

### ZnO Particles 109

To achieve good formability and corrosion resistance during hot pressing, the ZnO particles 109 with a mean particle size of 0.10 µm or more and 5.00 µm or less, need to be formed on the surface of the Al-plating layer 103 in an amount of coating of 0.5 g/m² or more and 10.0 g/m² or less, in terms of metallic zinc. The ZnO particles 109 come into point-contact with the mold with a lowered kinematic friction coefficient, thus improving formability. However, the ZnO particles 109 with a mean particle size of less than 0.10 µm fail to sufficiently improve formability due to an excessive number of contact points between the ZnO particles 109 and the mold.

Meanwhile, ZnO is an insulating body and the ZnO particles 109 with a mean particle size of more than 5.00 µm is unlikely to be crushed upon application of a welding pressure. Thus, sufficient power distribution points cannot be ensured, so that dust is easily caused to lower weldability.

It should be noted that a method of determining the mean particle size of the ZnO particles 109 is not limited. For instance, the mean particle size may be determined by observing any ten or more of the ZnO particles 109 at 2000-fold magnification with an SEM (Scanning Electron Microscope) or the like to measure particle sizes of these particles and averaging the particle sizes. Alternatively, the mean particle size of the ZnO particles 109 may be determined using a particle size analyzer.

When the amount of coating of all the ZnO particles 109 in the surface coating layer 107 is less than 0.5 g/m² in terms of metallic zinc, sufficient formability cannot be exhibited during hot pressing. Meanwhile, with an increase in the amount of coating of the ZnO particles 109, a film electrical resistance of the surface coating layer 107 increases to lower resistance weldability (e.g., spot weldability) of the steel sheet, although formability and corrosion resistance increase. In other words, when the amount of coating of all the ZnO particles 109 in the surface coating layer 107 is more than 10.0 g/m² in terms of metallic zinc, a sufficient resistance weldability of the steel sheet is difficult to achieve.

It should be noted that the term "amount of coating" herein means an amount of coating measured before the steel sheet is set and heated on the conveyor for hot pressing.

The amount of coating of the ZnO particles 109 on the Al-plating layer 103 may be measured by a calibration curve method using XRF (X-ray Fluorescence).

### Organic Resin 111

For the steel sheet according to the fourth exemplary embodiment, the organic resin 111, which is a component of the surface coating layer 107, is not limited as long as the organic resin 111 functions as a binder capable of keeping the ZnO particles 109 within the metallic coating. The organic resin 111 is configured to be combusted to disappear during preheating for hot pressing, so that the subsequent processes, such as pressing and welding, are performed without any influence thereof. The organic resin 111 may be an aqueous chemical agent. In this case, for instance, a cation resin, which is mildly alkaline and stable as well as ZnO, is preferably usable and examples of the cation resin include cationic urethane resin and cationic acrylic resin. It should be noted that a ratio of the concentration (g/kg) of the organic resin in the chemical agent is not limited according to the fourth exemplary embodiment.

To allow the organic resin 111 to sufficiently function as a binder, the content of the organic resin 111 with respect to the surface coating layer 107 as a whole is preferably in a range of, in mass%, 10% or more and 60% or less. At a content of less than 10%, the organic resin 111 fails to sufficiently function as a binder, so that the metallic coating is easy to separate before preheating. It should be noted that the content of the organic resin 111 is preferably 15% or more so that the organic resin 111 stably functions as a binder. Meanwhile, a content of the organic resin 111 of more than 60% results in unignorable emission of unpleasant odor.

Each of the intermediate coating layer 105 and the surface coating layer 107 may be formed on the Al-plating layer 103 by, but not limited to, a method including: preparing a solution or solvent where the above main components are dissolved; applying this solution or solvent on the surface of the Al-plating layer 103 using a known device such as roll coater and spray; and drying the applied solution or solvent. The applied solution or solvent may be dried by, but not limited to, a variety of techniques such as hot-air heating, IH (Induction Heating), NIR (Near InfraRed) heating, and resistance heating. Moreover, a heating temperature for drying is preferably determined as desired, considering a glass transition temperature (Tg) of the organic resin 111 (binder).

As described above, the Al-plated steel sheet 100 (steel sheet) according to the fourth exemplary embodiment, which includes the surface coating layer 107 and the intermediate coating layer 105, exhibits an excellent lubricity during hot pressing without loss of ZnO at the contact area with the conveyor and, consequently, exhibits excellent formability during the hot pressing, excellent corrosion resistance after the hot pressing, and the like. Furthermore, the steel sheet according to the fourth exemplary embodiment is less adhesive to a mold due to the presence of the highly lubricative surface coating layer 107. If the Al-plating layer 103 is accidentally powdered by heating, adhesion of the powder (e.g., Al-Fe powder) to a mold used for subsequent pressing would be reduced by the presence of the highly lubricative surface coating layer 107. Thus, the steel sheet according to the fourth exemplary embodiment can be hot-pressed without the necessity of removal of Al-Fe powder adhering to the mold, achieving excellent productivity.

### Fifth Exemplary Embodiment

Next, each layer according to the fifth exemplary embodiment will be described below in detail. The intermediate coating layer 105 according to the fifth exemplary embodiment satisfies the conditions (E).

### Base 101

The base 101 (a member for forming the Al-plating layer 103) for the Al-plated steel sheet 100 according to the fifth exemplary embodiment is a member configured to exhibit an excellent mechanical strength (i.e., a variety of properties against mechanical deformation and destroy such as tensile strength, yield point, extensibility, durability during a drawing process, hardness, impact strength, endurance strength, and creep strength) during hot pressing subsequent to formation of the plating layer. For instance, a member added with C (carbon) or alloy element for enhancement of hardenability is used. As a result, an automobile part produced by hot-pressing the Al-plated steel sheet 100, which is produced by forming the Al-plating layer 103, the intermediate coating layer 105, and the surface coating layer 107 as described later, exhibits an excellent mechanical strength.

In other words, the base 101 for the Al-plated steel sheet 100 according to the fifth exemplary embodiment may be any typical member with an excellent mechanical strength. For instance, the base 101 may be a member having, but not limited to, the same composition as that of the first exemplary embodiment.

### Al-Plating Layer 103

The Al-plating layer 103 is formed on at least one of opposite surfaces of the base 101. The Al-plating layer 103 may be formed in the same manner and have the same composition as in the first exemplary embodiment.

### Intermediate Coating Layer 105

For the configuration where the Al-plating layer 103 is formed on each of the opposite surfaces of the base 101, the intermediate coating layer 105 may be formed on the Al-plating layer 103 on at least one of the opposite surfaces of the base 101. For the configuration where the Al-plating layer 103 is formed on one of the opposite surfaces of the base 101, the intermediate coating layer 105 is, of course, formed directly on this surface (see Fig. 1). Furthermore, for the configuration where the Al-plating layer 103 is formed on each of the opposite surfaces of the base 101, the intermediate coating layer 105 is formed directly (adjacently) on the Al-plating layer 103 on each of the opposite surfaces (see Fig. 2).

The intermediate coating layer 105 is formed on the surface of the Al-plating layer 103 for prevention of oxidation of Al in the Al-plating layer 103 and prevention of reduction of ZnO in the surface coating layer 107. The intermediate coating layer 105 is made of a composite ceramics vapor deposited film of any one of Al₂O₃, ZrO₂, TiO₂, SiO₂, AlN, TiN, Si₃N₄, TiC and SiC or a composite ceramics vapor deposited film containing two or more of Al₂O₃, ZrO₂, TiO₂, SiO₂, AIN, TiN, Si₃N₄, TiC and SiC and has a thickness in a range of 10 nm or more and 1000 nm or less.

For the configuration where the Al-plating layer 103 is formed on each of the opposite surfaces of the base 101, the intermediate coating layer 105 may be formed on the plating layer on at least one of the opposite surfaces of the base 101. The intermediate coating layer 105 can be formed by, for instance, chemical vapor deposition or physical vapor deposition.

The intermediate coating layer 105 with a thickness of less than 10 nm does not sufficiently function as a barrier for preventing diffusion of oxygen and thus is not effective in prevention of oxidation of Al in the plating layer and prevention of reduction of ZnO in the surface coating layer 107. Meanwhile, a small residual amount of Zn results in an insufficient amount of coating of zinc phosphate provided by a chemical treatment (zinc phosphate treatment), failing to ensure film adhesion and, consequently, ensure a sufficient corrosion resistance of painted steel. Accordingly, a lower limit of the thickness of the intermediate coating layer 105 is 10 nm or more, preferably 20 nm or more. Meanwhile, when the intermediate coating layer 105 has a thickness of more than 1000 nm, weldability is impaired. Accordingly, an upper limit of the thickness of the intermediate coating layer 105 is 1000 nm or less, more preferably 400 nm or less. The thickness of the intermediate coating layer 105 can be determined by observing respective cross sections of the Al-plating layer 103, the intermediate coating layer 105, and the surface coating layer 107 formed on the surface of the Al-plated steel sheet 100 using SEM (Scanning Electron Microscope) or TEM (Transmission Electron Microscope). An interface (border) between the intermediate coating layer 105 and the Al-plating layer 103 can be clearly observed in an electro micrograph due to a contrast difference therebetween. Thus, the thickness of the intermediate coating layer 105 can be determined by measuring a distance from the intermediate coating layer 105 to the border.

The intermediate coating layer 105 is a ceramics vapor deposited film of any one of Al₂O₃, ZrO₂, TiO₂, SiO₂, AlN, TiN, Si₃N₄, TiC and SiC, which are capable of withstanding a heating temperature, or a composite ceramics vapor deposited film of two or more of Al₂O₃, ZrO₂, TiO₂, SiO₂, AlN, TiN, Si₃N₄, TiC and SiC. Among the above, oxides are especially preferable in terms of prevention of decreased function resulting from reduction by Al during heating and prevention of promotion of reduction of ZnO due to oxygen transmission.

Additionally, an oxide with a low coefficient of thermal expansion is preferable for reduction of breakage during heating.

When the intermediate coating layer 105 is not a vapor deposited film, the intermediate coating layer 105 is not effective in prevention of oxidation of Al in the plating layer and prevention in reduction of ZnO in the surface coating layer 107 irrespective of, for instance, formation of the Al₂O₃ layer by atmospheric oxidation. Additionally, the Al₂O₃ layer formed by anodizing in a solution has not a dense structure but a porous structure. The resulting anodic oxide film is thus not effective in prevention of oxidation of Al and prevention of reduction of ZnO. For instance, it is speculated that the intermediate coating layer 105 is densified as a result of forming a vapor deposited film by CVD (Chemical Vapor Deposition).

### Surface Coating Layer 107

The surface coating layer 107 contains the ZnO particles 109 with a mean particle size in a range of 0.10 µm or more and 5.00 µm or less, and the organic resin 111. An amount of coating of the ZnO particles 109 needs to be in a range of 0.5 g/m² or more and 10.0 g/m² or less, in terms of metallic zinc. It should be noted that for the configuration where the Al-plating layer 103 is formed on each of the opposite surfaces of the base 101, the surface coating layer 107 may be formed on the intermediate coating layer 105 on the Al-plating layer 103 on at least one of the opposite surfaces.

The surface coating layer 107 may be formed using, for instance, a solution prepared by blending the above components in a variety of solvents such as water and organic solvent.

### ZnO Particles 109

To achieve good formability and corrosion resistance during hot pressing, the ZnO particles 109 with a mean particle size of 0.10 µm or more and 5.00 µm or less, need to be formed on the intermediate coating layer 105 in an amount of coating of 0.5 g/m² or more and 10.0 g/m² or less, in terms of metallic zinc. The ZnO particles 109 come into point-contact with the mold with a lowered kinematic friction coefficient, thus improving formability. However, the ZnO particles 109 with a mean particle size of less than 0.10 µm fail to sufficiently improve formability due to an excessive number of contact points between the ZnO particles 109 and the mold.

Meanwhile, the ZnO particles 109 with a mean particle size of more than 5.00 µm lowers weldability. In spite of the insulating properties of ZnO, the ZnO particles 109 with a small particle size are crushed upon application of a welding pressure, ensuring sufficient power distribution points. However, when the ZnO particles 109 have a large mean particle size of more than 5 µm, the ZnO particles 109 are unlikely to be crushed upon application of a welding pressure. As a result, sufficient power distribution points cannot be ensured, so that dust is easily caused to lower weldability.

It should be noted that a method of determining the mean particle size of the ZnO particles 109 is not limited. For instance, the mean particle size may be determined by observing any ten or more of the ZnO particles 109 at 2000-fold magnification with an SEM (Scanning Electron Microscope) or the like to measure maximum particle sizes of these particles and averaging the maximum particle sizes. Alternatively, the mean particle size of the ZnO particles 109 may be determined using a particle size analyzer.

When the amount of coating of all the ZnO particles 109 in the surface coating layer 107 is less than 0.5 g/m² in terms of metallic zinc, sufficient formability cannot be exhibited during hot pressing. Meanwhile, with an increase in the amount of coating of the ZnO particles 109, a film electrical resistance of the surface coating layer 107 increases to lower resistance weldability (e.g., spot weldability) of the steel sheet, although formability and corrosion resistance increase. In other words, when the amount of coating of all the ZnO particles 109 in the surface coating layer 107 is more than 10.0 g/m² in terms of metallic zinc, a sufficient resistance weldability of the steel sheet is difficult to achieve.

It should be noted that the term "amount of coating" herein means an amount of coating measured before the steel sheet is set and heated on the conveyor for hot pressing.

### Organic Resin 111

For the Al-plated steel sheet 100 according to the fifth exemplary embodiment, the organic resin 111, which is a component of the surface coating layer 107, is not limited as long as the organic resin 111 functions as a binder capable of keeping the ZnO particles 109 within the metallic coating. The organic resin 111 is configured to be combusted to disappear during preheating for hot pressing, so that the subsequent processes, such as pressing and welding, are performed without any influence thereof. The organic resin 111 may be an aqueous chemical agent. In this case, for instance, a cation resin, which is mildly alkaline and stable as well as ZnO, is preferably usable and examples of the cation resin include cationic urethane resin and cationic acrylic resin. It should be noted that a ratio of the concentration (g/kg) of the organic resin in the chemical agent is not limited according to the fifth exemplary embodiment. Exemplary resins usable as the organic resin 111 according to the fifth exemplary embodiment of the invention include a cationic urethane resin (manufactured by DKS Co. Ltd., trade name: SUPERFLEX 650).

To allow the organic resin 111 to sufficiently function as a binder, the content of the organic resin 111 with respect to the surface coating layer 107 as a whole is preferably in a range of, in mass%, 10% or more and 60% or less. At a content of less than 10%, the organic resin 111 fails to sufficiently function as a binder, so that the metallic coating is easy to separate before preheating. It should be noted that the content of the organic resin 111 is preferably 15% or more so that the organic resin 111 stably functions as a binder. Meanwhile, a content of the organic resin 111 of more than 60% results in unignorable emission of unpleasant odor.

It should be noted that the amount of coating of the ZnO particles 109 on the Al-plating layer 103 may be measured by a calibration curve method using XRF (X-ray Fluorescence).

Next, the intermediate coating layer 105 may be formed on the Al-plating layer 103 in any method for forming a vapor deposited film. Chemical vapor deposition and physical vapor deposition, which allow for relatively easy formation of a vapor deposited film, are applicable.

A method of forming the surface coating layer 107 is not limited. The surface coating layer 107 can be formed by applying an aqueous solution or a solvent where the main components are dissolved on the Al-plating layer 103 by a typical device such as roll coater and spray and drying it.

For forming the surface coating layer 107, the applied solution may be dried by, but not limited to, a variety of techniques such as hot-air heating, IH (Induction Heating), NIR (Near InfraRed) heating, and resistance heating. Moreover, a heating temperature for drying is preferably determined as desired, considering a glass transition temperature (Tg) of the organic resin 111 (binder).

As described above, the Al-plated steel sheet 100 (steel sheet) according to the fifth exemplary embodiment exhibits an excellent lubricity during hot pressing without loss of ZnO at the contact area with the conveyor due to the presence of the surface coating layer 107 and the intermediate coating layer 105 and, consequently, exhibits excellent formability during the hot pressing, excellent corrosion resistance after the hot pressing, and the like. Furthermore, the Al-plated steel sheet 100 according to the fifth exemplary embodiment is less adhesive to a mold due to the presence of the highly lubricative surface coating layer 107. If the Al-plating layer 103 is accidentally powdered by heating, adhesion of the powder (e.g., Al-Fe powder) to a mold used for subsequent pressing would be reduced by the presence of the highly lubricative surface coating layer 107. Thus, the Al-plated steel sheet 100 according to the fifth exemplary embodiment can be hot-pressed without the necessity of removal of Al-Fe powder adhering to the mold, achieving excellent productivity.

### Example(s)

Effects of the exemplary embodiment of the invention will be specifically described below with reference to Examples. It should be noted that the conditions for Examples of the invention below are not exhaustive.

### Example A

A cold-rolled steel sheet (thickness: 1.4 mm) with chemical components shown in Table 1 (balance: Fe and inevitable impurities) was used. The Al-plating layer 103 was formed on each of opposite surfaces of the cold-rolled steel sheet using a typical Al-plating bath by Sendzimir process.

It should be noted that the amount of coating of the Al-plating layer 103 on the base 101 was adjusted to 160 g/m² per each surface by gas wiping.

**Table 1**

| C | Si | Mn | P | S | Ti | B | Al | N |
|---|---|---|---|---|---|---|---|---|
| 0.22 | 0.12 | 1.25 | 0.01 | 0.005 | 0.02 | 0.003 | 0.04 | 0.0005 |

Next, after the base 101 with the Al-plating layer 103 formed thereon was cooled, the intermediate coating layer 105 and surface coating layer 107, each of which contained the above respective components, were formed under formation conditions shown in Tables 2 and 3. The respective intermediate coating layers 105 of Sample Nos. A1 to A5 and A7 to A15 and Sample Nos. A17 to A23 and A27 were formed by anodizing performed under conditions shown in Tables 2 and 3. It should be noted that a sulfuric acid aqueous solution was used for Sample Nos. A1 to A5, A8, A12 to A15, A18 to A23, and A27, a hydrochloric acid aqueous solution was used for Sample No. A17, and a mixed aqueous solution of sulfuric acid and hydrochloric acid was used for Sample Nos. A7 and A9 to A11. For Sample No. A6 and Sample No. A24, an aqueous solution was applied and heated under conditions shown in Tables 2 and 3 and then burnt. For Sample No. A16, the Al-plating layer 103 was formed by atmospheric oxidation performed under conditions shown in Table 3. For Sample Nos. A25 and A26, the Al-plating layer 103 was not subjected to any treatment. It should be noted that a blank in Table 3 means that corresponding one of the intermediate coating layer 105 and the surface coating layer 107 was not formed.

Subsequently, the surface coating layer 107 was formed by applying, on the Al-plating layer 103 with the intermediate coating layer 105 formed thereon, a solution prepared by blending a dispersant of the ZnO particles 109 (manufactured by SAKAI CHEMICAL INDUSTRY CO., LTD., trade name: DIF-3ST4S) and a cationic urethane resin (manufactured by DKS Co. Ltd., trade name: SUPERFLEX 650) as the organic resin 111 using a roll coater, and drying the solution such that a sheet temperature reached 80 °C. The organic resin 111 of the surface coating layer 107 accounted for 30 mass% (ZnO: 70 mass%). For Sample Nos. A24 and A25, the organic resin 111 was not used and cyclopentasiloxane with ZnO particles being dispersed was applied and then dried at 80 °C.

Sample Al-plated steel sheets 100 were thus produced. It should be noted that the solution for forming the surface coating layer 107 shown in Tables 2 and 3 was prepared by blending a commercially available reagent with distilled water. It should also be noted that the term "Zn Coating Weight" in Tables 2 and 3 means a metallic-zinc-mass equivalent (unit: g/m²) of a total amount of coating of the ZnO particles 109 per square meter of the intermediate coating layer 105.

### Measurement Conditions

The composition of the intermediate coating layer 105, the particle size of the ZnO particles 109, and the ZnO coating weight were determined as follows.

### 1. Composition of Intermediate Coating Layer 105

The intermediate coating layer 105 consisted mainly of Al, O and S. For the S/AI ratio and S/O ratio, each sample was measured in terms of each of Al, O and S at a depth of 2 µm using a glow discharge optical emission spectroscopy manufactured by HORIBA, Ltd. (trade name: GD-Profiler 2). The measurement conditions were 600 Pa, output of 35 W, and use of argon gas. A mass% of each S, Al and O in a surface with a highest S-concentration was outputted. The measurement results of five bars (samples) were averaged.

### 2. Particle Size of ZnO Particles 109

The ZnO particles 109 were observed at 2000-fold magnification with a scanning electron microscope manufactured by JEOL Ltd. (trade name: JSM-7800F) and respective maximum particle sizes of 20 of the ZnO particles 109 were measured and averaged. The average value was defined as the particle size of the ZnO particles 109.

### 3. ZnO Coating Weight

The ZnO coating weight was measured with an X-ray fluorescence analyzer manufactured by Rigaku Corporation (trade name: ZSX Primus) under the following conditions. For the measurement, a calibration curve was created in advance that represented a relationship between ZnO coating weight and intensity of X-ray fluorescence in terms of metallic zinc content and the amount of coating was determined with reference to the calibration curve.
measurement diameter: 30 mm
measurement atmosphere: vacuum
spectrum: Zn-Ka

The number of counted peaks of Zn-Ka of X-ray fluorescence analysis measured under the above conditions was referred to.

Next, the sample steel sheets produced as described above were evaluated by the following methods in terms of a variety of properties.

### (1) Lubricity of Hot Working (Lubricity)

For evaluation of lubicity of hot working, each sample steel sheet was subjected to a hot mold-pulling test. More specifically, each 30 mm × 350 mm sample steel sheet was put in a furnace and heated at 900 °C for 6 minutes while sandwiched between two SiC plates (60 mm width × 200 mm length × 30 mm thickness) and taken out of the furnace. A flat dice (50 mm width × 40 mm length) of SKD11 was then pressed against opposite surfaces of the steel sheet at approximately 700 °C for a pulling process. The steel sheet was sandwiched between by the SiC plates at both sides thereof with supply of oxygen through the surfaces being sufficiently cut in order to simulate the situation where the ZnO metallic coating disappeared at the stacked portion in contact with the conveyor under more severer conditions. A pressing load and a pulling load were measured and a value calculated by pulling load/(2 × pressing load) was defined as a friction coefficient for hot working. It should be noted that a smaller kinematic friction coefficient means a higher lubicity of hot working, and a kinematic friction coefficient of less than 0.52 is evaluated to pass in Table 4.

### (2) Corrosion resistance of Painted Steel

Each 120 mm × 200 mm sample steel sheet was put in a furnace and placed on an in-furnace SiC pedestal with an evaluation surface of the steel sheet in contact with the pedestal. The steel sheet was then heated in the furnace at 900 °C for 6 minutes with a SUS304 block (50 mm × 50 mm x70 mm) having been heated to 900 °C placed thereon. Immediately after taken out of the furnace, the steel sheet was sandwiched between a stainless steel mold for rapid cooling. The cooling rate was approximately 150 °C/sec. Next, each steel sheet having been cooled was cut from a center thereof into a 70 mm × 150 mm piece. After subjected to a chemical conversion treatment with a chemical conversion solution (PB-SX35) manufactured by Nihon Parkerizing Co., Ltd., the piece was coated with a electrodeposition paint (POWERNICS 110) manufactured by Nippon Paint Co., Ltd. such that a thickness of the piece reached 20 µm, and burnt at 170 °C. It should be noted that each 70 mm × 150 mm steel sheet with a thermocouple welded thereto was put in an air atmosphere furnace whose temperature was set to 900 °C, and a temperature of the steel sheet was measured until it reached 900 °C to calculate an averate heating rate. The averate heating rate was 5 °C/sec.

Evaluation of corrosion resistance of painted steel was performed by a method in accordance with JASO M609 instituted by Society of Automotive Engineers of Japan, Inc. Specifically, a film was cross-cut in advance with a box-cutter, and a width (maximum value on one side) of blistering of the film from the cross cut was measured after the elapse of 180 cycles of a corrosion test (60 days). A smaller width of blistering of the film means a higher corrosion resistance and a width equal to or less than 5 mm is evaluated to pass in Table 4.

### (3) Spot Weldability

Spot weldability was evaluated as follows.

The prepared sample steel sheets were each put in a furnace and heated therein at 900 °C for 6 minutes. The sample steel sheets were then each sandwiched by a stainless steel mold for rapid cooling immediately after taken out of the furnace. The cooling rate was approximately 150 °C/sec. Each cooled steel sheet was cut into a 30 × 50 mm piece for measurement of a suitable current range for spot welding (maximum current to minimum current). The measurement conditions were as follows. A current value achieving a nugget diameter of 3 × (t)^{0.5} was defined as the minimum current, whereas a current causing expulsion was defined as the maximum current.
current: DC
electrode: made of chrome copper, DR (40R/6-mm-diameter tip end)
compression: 400 kgf (1kgf = 9.8N)
power supply time: 240 milliseconds

A larger value means a higher spot weldability and a spot weldability of 1.0 kA or more is evaluated to pass in Table 4.

### (4) Disappearance Test of ZnO

Each sample steel sheet was punched into a diameter of 30 mm, and stacked on a 70 mm × 70 mm in-furnace SiC pedestal while a 50 mm × 50 mm × 70 mm SUS304 block having been heated to 900 °C was placed thereon. The steel sheet in this state was then heated in a furnace at 900 °C for 6 minutes, and sandwiched by a stainless steel mold for rapid cooling immediately after taken out of the furnace. Values of Zn coating weight before and after the heating were measured with XRF. The Zn coating weight was measured in terms of Zn and a ratio of residual amount of ZnO was calculated in terms of Zn.

A sample with a Zn residual ratio of 75% or more and a residual amount of Zn of 0.40 g/m² or more is evaluated to pass in Table 4.

As is understood from Table 4, it has been found that all the Al-plated steel sheets 100 (Examples) within the scope of the invention achieved good results of all the four evaluations (the variety of properties and disappearance test of ZnO), where: the intermediate coating layer 105 formed directly on the Al-plating layer 103 contained S and Al oxide; the thickness of the intermediate coating layer 105 was in a range of 10 nm or more and 1000 nm or less; the surface coating layer 107 formed directly on the intermediate coating layer 105 contained the ZnO particles 109 with a mean particle size of 0.10 µm or more and 5.00 µm or less, and the organic resin 111; and the amount of coating of the ZnO particles 109 was in a range of 0.5 g/m² or more and 10.0 g/m² or less in terms of metallic zinc.

**Table 2**

| Sample No. | anodizing | | | intermediate coating layer 105 | | | surface coating layer 107 | | | |
|---|---|---|---|---|---|---|---|---|---|---|
| | | | | | | | ZnO 109 | | organic resin 111 | |
| | solution (vol.%) | electrolysis conditions | | thickness (nm) | S/Al ratio | S/O ratio | mean particle size of ZnO (*µ*m) | Zn coating weight (g/m²) | resin species 111 | ratio (mass%) |
| | | current density (A/dm²) | electrolysis electrical quantity (coulomb) | | | | | | | |
| 1 | 10% sulfuric acid aqueous solution | 1 | 1500 | 1000 | 0.016 | 0.02 | 1 | 1.5 | cationic urethane resin | 30 |
| 2 | 10% sulfuric acid aqueous solution | 1 | 600 | 400 | 0.016 | 0.02 | 1 | 1.5 | cationic urethane resin | 30 |
| 3 | 10% sulfuric acid aqueous solution | 1 | 150 | 100 | 0.016 | 0.02 | 1 | 1.5 | cationic urethane resin | 30 |
| 4 | 10% sulfuric acid aqueous solution | 1 | 30 | 20 | 0.016 | 0.02 | 1 | 1.5 | cationic urethane resin | 30 |
| 5 | 10% sulfuric acid aqueous solution | 1 | 15 | 10 | 0.016 | 0.02 | 1 | 1.5 | cationic urethane resin | 30 |
| 6 | applying 30% aluminum sulfate aqueous solution (3.2ml/m²) + burning (sheet temperature to be reached: 80°C) | | | 100 | 0.444 | 0.5 | 1 | 1.5 | cationic urethane resin | 30 |
| 7 | 10% hydrochloric acid-0.1% sulfuric acid aqueous solution | 1 | 600 | 100 | 0.0008 | 0.001 | 1 | 1.5 | cationic urethane resin | 30 |
| 8 | 90% sulfuric acid aqueous solution | 1 | 600 | 100 | 0.12 | 0.15 | 1 | 1.5 | cationic urethane resin | 30 |
| 9 | 10% hydrochloric acid-2% sulfuric acid aqueous solution | 1 | 600 | 100 | 0.0064 | 0.008 | 1 | 1.5 | cationic urethane resin | 30 |
| 10 | 10% hydrochloric acid-50% sulfuric acid aqueous solution | 1 | 600 | 100 | 0.08 | 0.1 | 1 | 1.5 | cationic urethane resin | 30 |
| 11 | 10% hydrochloric acid-5% sulfuric acid aqueous solution | 1 | 600 | 100 | 0.008 | 0.01 | 1 | 1.5 | cationic urethane resin | 30 |
| 12 | 10% sulfuric acid aqueous solution | 1 | 150 | 100 | 0.016 | 0.02 | 0.1 | 1.5 | cationic urethane resin | 30 |
| 13 | 10% sulfuric acid aqueous solution | 10 | 150 | 100 | 0.016 | 0.02 | 5 | 1.5 | cationic urethane resin | 30 |
| 14 | 10% sulfuric acid aqueous solution | 60 | 150 | 100 | 0.016 | 0.02 | 1 | 0.5 | cationic urethane resin | 30 |
| 15 | 10% sulfuric acid aqueous solution | 10 | 150 | 100 | 0.016 | 0.02 | 1 | 10 | cationic urethane resin | 30 |

**[Table 3]**

| Sample No. | anodizing | | | intermediate coating layer 105 | | | surface coating layer 107 | | | |
|---|---|---|---|---|---|---|---|---|---|---|
| | | | | | | | ZnO 109 | | organic resin 111 | |
| | solution (vol.%) | electrolysis conditions | | thickness (nm) | S/AI ratio | S/O ratio | mean particle size of ZnO (*µ*m) | Zn coating weight (g/m²) | resin species 111 | ratio (mass%) |
| | | current density (A/dm²) | electrolysis electrical quantity (coulomb) | | | | | | | |
| 16 | atmospheric oxidation (300°C × 24 hours) | | | 500 | 0 | 0 | 1 | 1.5 | cationic urethane resin | 30 |
| 17 | 20% hydrochloric acid aqueous solution | 1 | 600 | 100 | 0 | 0 | 1 | 1.5 | cationic urethane resin | 30 |
| 18 | 10% sulfuric acid aqueous solution | 1 | 10 | 7 | 0.016 | 0.02 | 1 | 1.5 | cationic urethane resin | 30 |
| 19 | 10% sulfuric acid aqueous solution | 1 | 2000 | 1300 | 0.016 | 0.02 | 1 | 1.5 | cationic urethane resin | 30 |
| 20 | 10% sulfuric acid aqueous solution | 10 | 150 | 100 | 0.016 | 0.02 | 0.06 | 1.5 | cationic urethane resin | 30 |
| 21 | 10% sulfuric acid aqueous solution | 1 | 150 | 100 | 0.016 | 0.02 | 8 | 1.5 | cationic urethane resin | 30 |
| 22 | 10% sulfuric acid aqueous solution | 1 | 150 | 100 | 0.016 | 0.02 | 1 | 0.3 | cationic urethane resin | 30 |
| 23 | 10% sulfuric acid aqueous solution | 1 | 150 | 100 | 0.016 | 0.02 | 1 | 13 | cationic urethane resin | 30 |
| 24 | applying 5% aluminum sulfate + 5% sulfuric acid aqueous solution (1.6ml/m²) + burning (sheet temperature to be reached: 80°C) | | | 100 | 0.711 | 0.8 | 1 | 1.5 | none | - |
| 25 | no treatment | | | - | - | - | 1 | 1.5 | none | - |
| 26 | no treatment | | | - | - | - | 1 | 1.5 | cationic urethane resin | 30 |
| 27 | 10% sulfuric acid aqueous solution | 1 | 10 | 7 | 0.016 | 0.02 | 1 | 10 | cationic urethane resin | 30 |

**Table 4**

| Sample No. | Evaluation Test | | | | |
|---|---|---|---|---|---|
| | Lubricity for Hot Working | Corrosion Resistance of Painted Steel | Weldability | ZnO Disappearance Test | |
| | | | | Ratio of Residual Amount of Zn (%) | Residual Amount of Zn (g/m²) |
| A1 | 0.46 | 2.3 | 2.1 | 96 | 1.44 |
| A2 | 0.47 | 2.4 | 2.0 | 95 | 1.43 |
| A3 | 0.46 | 2.5 | 2.0 | 94 | 1.41 |
| A4 | 0.46 | 2.5 | 2.1 | 92 | 1.38 |
| A5 | 0.46 | 2.6 | 2.1 | 90 | 1.35 |
| A6 | 0.48 | 2.9 | 2.3 | 77 | 1.16 |
| A7 | 0.48 | 2.9 | 2.3 | 76 | 1.14 |
| A8 | 0.47 | 2.8 | 2.2 | 83 | 1.25 |
| A9 | 0.46 | 2.5 | 2.1 | 91 | 1.37 |
| A10 | 0.46 | 2.5 | 2.1 | 90 | 1.35 |
| A11 | 0.46 | 2.4 | 2.0 | 95 | 1.43 |
| A12 | 0.49 | 2.4 | 2.0 | 94 | 1.41 |
| A13 | 0.47 | 2.4 | 2.0 | 94 | 1.41 |
| A14 | 0.5 | 4.8 | 2.5 | 94 | 0.47 |
| A15 | 0.46 | 2 | 1.6 | 94 | 9.40 |
| A16 | 0.65 | 7.8 | 2.5 | 10 | 0.15 |
| A17 | 0.64 | 8.2 | 2.5 | 10 | 0.15 |
| A18 | 0.6 | 7.6 | 2.4 | 15 | 0.23 |
| A19 | 0.46 | 2.3 | 0.9 | 95 | 1.43 |
| A20 | 0.62 | 2.3 | 2.0 | 94 | 1.41 |
| A21 | 0.46 | 2.3 | 0.4 | 94 | 1.41 |
| A22 | 0.67 | 6.9 | 2.5 | 94 | 0.28 |
| A23 | 0.46 | 2 | 0.7 | 94 | 12.22 |
| A24 | 0.72 | 7.8 | 2.7 | 8 | 0.12 |
| A25 | 0.68 | 8 | 2.5 | 12 | 0.18 |
| A26 | 0.68 | 8 | 2.8 | 3 | 0.05 |
| A27 | 0.60 | 7.6 | 2.4 | 2 | 0.20 |

Meanwhile, for each of Sample Nos. A16 to A27, the intermediate coating layer 105 or the organic resin 111 was not provided, the intermediate coating layer 105 did not contain S or had an inappropriate thickness, or the mean particle size of the ZnO particles 109, the amount of coating of the ZnO particles 109 or the like was out of the predetermined range according to the invention. It has been found that none of the Al-plated steel sheets (Sample Nos. A16 to A27) out of the scope of the invention achieved a good result of at least one of the above four evaluations (the variety of properties and the disappearance test of ZnO). Sample Nos. A16 and A17, which did not contain S but only contains the Al oxide, were formed by atmospheric oxidation and anodizing in an S-free solution, respectively. In particular, Sample Nos. A16 and A17 (the intermediate coating layer 105 contained no S), Sample Nos. A25 and A26 (the intermediate coating layer 105 was not formed), and Sample Nos. A18 and A27 (the thickness of the intermediate coating layer 105 was not satisfactory) were evaluated as good in terms of weldability but as bad in terms of disappearance test of ZnO and corrosion resistance. Accordingly, the formability and corrosion resistance of each of these samples were supposed to be lowered at a portion where ZnO disappeared.

### Example B

A cold-rolled steel sheet (thickness: 1.4 mm) with chemical components shown in Table 5 (balance: Fe and inevitable impurities) was used as the base 101. The Al-plating layer 103 was formed on each of opposite surfaces of the cold-rolled steel sheet using a typical Al-plating bath by Sendzimir process. An annealing temperature for forming the Al-plating layer 103 was approximately 800 °C. The amount of coating of the Al-plating layer 103 on the base 101 was adjusted to 160 g/m² per each surface by gas wiping.

**Table 5**

| Element | C | Si | Mn | P | S | Ti | B | Al | N |
|---|---|---|---|---|---|---|---|---|---|
| Content (mass%) | 0.22 | 0.12 | 1.25 | 0.01 | 0.005 | 0.02 | 0.003 | 0.04 | 0.0005 |

Next, after the base 101 with the Al-plating layer 103 formed thereon was cooled, the intermediate coating layer 105 and surface coating layer 107 shown in Table 6 were formed. To form the intermediate coating layer 105 and the surface coating layer 107, a solution prepared by blending the components shown in Table 6 in a solvent was sequentially applied on the surface of the Al-plating layer 103 using a roll coater and burnt at approximately 80 °C. For Sample Nos. B26 and B27, no intermediate coating layer 105 was formed.

It should be noted that specific compositions of the solutions were as follows. The solutions with the following compositions were each prepared by blending a commercially available reagent with distilled water.
Sample No. B1:
   2.0% Na₂B₄O₇ aqueous solution, pH 10
Sample No. B2: 10% sodium silicate aqueous solution, pH 12
Sample No. B3:
   10% Na₃PO₄·12H₂O aqueous solution, pH 12
Sample No. B4:
   2% AlPO₄ aqueous solution + HNO₃, pH 3
Sample No. B5:
   2% bis(4-hydroxybenzenesulfonate)zinc aqueous solution + HNO₃, pH 3
Sample No. B6:
   2% P-toluene sodium sulfinate aqueous solution + HNO₃, pH 3
Sample No. B7:
   5% KMnO₄ aqueous solution, pH 6
Sample Nos. B8, B10, and B11:
   2.5% KMnO₄ + 2.5% sodium silicate aqueous solution, pH 12
Sample Nos. B9 and B12 to B25:
   2.5% KMnO₄ + 2.5% Zn₂SiO₄ aqueous solution + CH₃COOH, pH 4

Subsequently, the surface coating layer 107 was formed by applying, on the Al-plating layer 103 with the intermediate coating layer 105 formed thereon, a solution prepared by blending a dispersant of the ZnO particles 109 (manufactured by SAKAI CHEMICAL INDUSTRY CO., LTD., trade name: DIF-3ST4S) and a cationic urethane resin (manufactured by DKS Co. Ltd., trade name: SUPERFLEX 650; liquid) as the organic resin 111 using a roll coater, and drying the solution such that a sheet temperature reached 80 °C in the same manner as when the intermediate coating layer 105 was formed. The surface coating layer 107 containing the organic resin 111 in an amount of 30 mass% (ZnO: 70 mass%) was thus formed. For Sample No. B27, only the dispersant for the ZnO particles 109 was applied and dried at 80 °C.

### Measurement Conditions

The composition and film thickness of the intermediate coating layer 105, the particle size of the ZnO particles 109, and the ZnO coating weight were identified as follows.

### 1. Composition of Intermediate Coating Layer 105

The composition of the layered double hydroxide was identified by comparing peak with ICDD data, the peak being determined by a thin-film method using an X-ray diffractometer manufactured by Rigaku Corporation (trade name: SmartLab 3) with Cu-Kα beam (incident angle: 90 degrees).

### 2. Film thickness of Intermediate Coating Layer 105

A cross section of the intermediate coating layer 105 was observed using a scanning electron microscope to measure thicknesses at any ten points in the intermediate coating layer 105, and the thicknesses was averaged to determine the film thickness.

### 3. Mn/Si mass ratio

Respective amounts of coating of Mn and Si were measured using an X-ray fluorescence analyzer manufactured by Rigaku Corporation (trade name: ZSX Primus) under the following conditions and the mass ratio was determined from the amounts of coating. For the measurement, a calibration curve was created in advance that represented a relationship between the amount of each of Mn and Si and intensity of X-ray fluorescence and the amount of coating was determined with reference to the calibration curve.
- measurement diameter: 30 mm
- measurement atmosphere: vacuum
- spectrum: Mn-Kα (Si-Kα)

The number of counted peaks of Mn-Kα (Si-Kα) of X-ray fluorescence analysis measured under the above conditions was referred to.

### 4. Particle Size of ZnO Particles 109

The ZnO particles 109 were observed at 2000-fold magnification with a scanning electron microscope manufactured by JEOL Ltd. (trade name: JSM-7800F) and respective maximum diameters of 20 of the ZnO particles 109 were measured and averaged. The average value was defined as the particle size of the ZnO particles 109.

### 5. ZnO Coating Weight

The ZnO coating weight was measured with an X-ray fluorescence analyzer manufactured by Rigaku Corporation (trade name: ZSX Primus) under the following conditions. For the measurement, a calibration curve was created in advance that represented a relationship between the Zn content and intensity of X-ray fluorescence and the amount of coating was determined with reference to the calibration curve.
- measurement diameter: 30 mm
- measurement atmosphere: vacuum
- spectrum: Zn-Ka

The number of counted peaks of Zn-Ka of X-ray fluorescence analysis measured under the above conditions was referred to.

### Evaluation of Samples

Next, the sample steel sheets produced as described above were evaluated by the following methods in terms of a variety of properties.

### (1) Lubricity of Hot Working

For evaluation of lubicity of hot working, each sample was subjected to a hot mold-pulling test.

Each 30 mm × 350 mm sample was put in a furnace and heated at 900 °C for 6 minutes while sandwiched between two SiC plates (60 mm width × 200 mm length × 30 mm thickness) and taken out of the furnace. A flat dice (width: 50 mm width × length: 40 mm) of SKD11 was then pressed against opposite surfaces of the steel sheet at approximately 700 °C for a pulling process. A pressing load and a pulling load were measured and a value calculated by pulling load/(2 × pressing load) was defined as a friction coefficient for hot working. A friction coefficient for hot working of less than 0.52 was evaluated to pass.

### (2) Corrosion Resistance of Painted Steel

Each 120 mm × 200 mm sample was put in a furnace and placed on an in-furnace SiC pedestal with an evaluation surface of the sample in contact with the pedestal. The sample was then heated in the furnace at 900 °C for 6 minutes with a SUS304 block (50 mm × 50 mm ×70 mm) having been heated to 900 °C placed thereon. Immediately after taken out of the furnace, the sample was sandwiched between a stainless steel mold for rapid cooling. The cooling rate was approximately 150 °C/sec. Next, each steel sheet having been cooled was cut from a center thereof into a 70 mm × 150 mm piece. After subjected to a chemical conversion treatment with a chemical conversion solution (PB-SX35) manufactured by Nihon Parkerizing Co., Ltd., the piece was coated with a electrodeposition paint (POWERNICS 110) manufactured by Nippon Paint Co., Ltd. such that a thickness of the piece reached 20 µm, and burnt at 170 °C. It should be noted that each 70 mm × 150 mm sample with a thermocouple welded thereto was put in an air atmosphere furnace whose temperature was set to 900 °C, and a temperature of the sample was measured until it reached 900 °C to calculate an averate heating rate. The averate heating rate was 5 °C/sec.

Evaluation of corrosion resistance of painted steel was performed by a method in accordance with JASO M609 instituted by Society of Automotive Engineers of Japan, Inc. Specifically, a film was cross-cut in advance with a box-cutter, and a width (maximum value on one side) of blistering of the film from the cross cut was measured after the elapse of 180 cycles of a corrosion test (60 days). A width of 5mm or less was evaluated to pass.

### (3) Spot Weldability

Spot weldability was evaluated as follows.

The prepared samples were each put in a furnace and heated therein at 900 °C for 6 minutes. The samples were then each sandwiched by a stainless steel mold for rapid cooling immediately after taken out of the furnace. The cooling rate was approximately 150 °C/sec. Each cooled steel sheet was cut into a 30 mm × 50 mm piece for measurement of a suitable current range for spot welding (maximum current to minimum current). The measurement conditions were as follows. A current value achieving a nugget diameter of 3 × (t)^{0.5} was defined as the minimum current, whereas a current causing expulsion was defined as the maximum current. A current range of 1.0 A or more was evaluated to pass.
- current: DC
- electrode: made of chrome copper, DR (40R/6-mm-diameter tip end)
- compression: 400 kgf (1kgf = 9.8N)
- power supply time: 240 milliseconds

### (4) Disappearance Test of ZnO (Residual Ratio and Residual Amount of ZnO)

Each sample was punched into a diameter of 30 mm, and stacked on a 70 mm × 70 mm in-furnace SiC pedestal while a 50 mm × 50 mm × 70 mm SUS304 block having been heated to 900 °C was placed thereon. The sample in this state was then heated in a furnace at 900 °C for 6 minutes, and sandwiched by a stainless steel mold for rapid cooling immediately after taken out of the furnace. Values of Zn coating weight before and after the heating were measured with XRF. The ratio of residual amount of ZnO was calculated as well as the ZnO coating weight. A residual amount of 0.4 g/m² or more was evaluated to pass.

Table 6 shows the results.

**Table 6**

| Sample No. | intermediate coating layer 105 | | | surface coating layer 107 | | | | lubricity for hot working | corrosion resistance of painted steel | spot weldability | ZnO disappearance test | |
|---|---|---|---|---|---|---|---|---|---|---|---|---|
| | type | Mn/Si | film thickness (nm) | ZnO | | organic resin | | | | | | |
| | | | | mean particle size of ZnO (*µ*m) | Zn coating weight (g/m²) | resin species | ratio (mass%) | | | | ratio of residual amount of Zn (%) | residual amount of Zn (g/m²) |
| B1 | sodium borate | - | 100 | 1 | 1.5 | cationic urethane resin | 30 | 0.47 | 2.6 | 2.7 | 83 | 1.25 |
| B2 | sodium silicate | - | 100 | 1 | 1.5 | cationic urethane resin | 30 | 0.48 | 2.4 | 2.8 | 84 | 1.26 |
| B3 | sodium phosphate | - | 100 | 1 | 1.5 | cationic urethane resin | 30 | 0.47 | 2.5 | 2.7 | 83 | 1.25 |
| B4 | aluminum phosphate | - | 100 | 1 | 1.5 | cationic urethane resin | 30 | 0.47 | 2.4 | 2.6 | 85 | 1.28 |
| B5 | zinc sulfonate | - | 100 | 1 | 1.5 | cationic urethane resin | 30 | 0.48 | 2.3 | 2.9 | 84 | 1.26 |
| B6 | sodium sulfinate | - | 100 | 1 | 1.5 | cationic urethane resin | 30 | 0.46 | 2.6 | 2.8 | 83 | 1.25 |
| B7 | potassium permanganate | - | 100 | 1 | 1.5 | cationic urethane resin | 30 | 0.47 | 2.4 | 2.8 | 86 | 1.29 |
| B8 | potassium permanganate+lithium silicate | 25 | 100 | 1 | 1.5 | cationic urethane resin | 30 | 0.48 | 2.3 | 2.9 | 90 | 1.35 |
| B9 | zinc permanganate+zinc orthosilicate | 25 | 100 | 1 | 1.5 | cationic urethane resin | 30 | 0.47 | 2.3 | 2.9 | 91 | 1.37 |
| B10 | potassium permanganate+lithium silicate | 1 | 100 | 1 | 1.5 | cationic urethane resin | 30 | 0.48 | 2.4 | 2.7 | 89 | 1.34 |
| B11 | potassium permanganate+lithium silicate | 50 | 100 | 1 | 1.5 | cationic urethane resin | 30 | 0.47 | 2.2 | 2.7 | 90 | 1.35 |
| B12 | zinc permanganate+zinc orthosilicate | 25 | 10 | 1 | 1.5 | cationic urethane resin | 30 | 0.48 | 2.4 | 2.8 | 89 | 1.34 |
| B13 | zinc permananate+zinc orthosilicate | 25 | 1000 | 1 | 1.5 | cationic urethane resin | 30 | 0.48 | 2.5 | 2.7 | 88 | 1.32 |
| B14 | zinc permanganate+zinc orthosilicate | 25 | 100 | 0.1 | 1.5 | cationic urethane resin | 30 | 0.49 | 2.4 | 2.8 | 87 | 1.31 |
| B15 | zinc permanganate+zinc orthosilicate | 25 | 100 | 5 | 1.5 | cationic urethane resin | 30 | 0.47 | 2.4 | 2.9 | 89 | 1.34 |
| B16 | zinc permanganate+zinc orthosilicate | 25 | 100 | 1 | 0.5 | cationic urethane resin | 30 | 0.50 | 4.8 | 3.0 | 86 | 0.43 |
| B17 | zinc permanganate+zinc orthosilicate | 25 | 100 | 1 | 0.8 | cationic urethane resin | 30 | 0.49 | 4.3 | 2.8 | 87 | 0.70 |
| B18 | zinc permanganate+zinc orthosilicate | 25 | 100 | 1 | 10 | cationic urethane resin | 30 | 0.46 | 3.2 | 1.4 | 86 | 8.60 |
| B19 | zinc permanganate+zinc orthosilicate | 25 | 100 | 1 | 1.5 | cationic acrylic resin | 30 | 0.48 | 2.4 | 2.8 | 90 | 1.35 |
| B20 | zinc permanganate+zinc orthosilicate | 25 | 5 | 1 | 1.5 | cationic urethane resin | 30 | 0.63 | 7.6 | 2.8 | 15 | 0.23 |
| B21 | zinc permanganate+zinc orthosilicate | 25 | 1200 | 1 | 1.5 | cationic urethane resin | 30 | 0.48 | 8.4 | 2.7 | 84 | 1.26 |
| B22 | zinc permanganate+zinc orthosilicate | 25 | 100 | 0.06 | 1.5 | cationic urethane resin | 30 | 0.58 | 2.5 | 2.9 | 86 | 1.29 |
| B23 | zinc permanganate+zinc orthosilicate | 25 | 100 | 8 | 1.5 | cationic urethane resin | 30 | 0.49 | 2.5 | 0.6 | 85 | 1.28 |
| B24 | zinc permanganate+zinc orthosilicate | 25 | 100 | 1 | 0.3 | cationic urethane resin | 30 | 0.63 | 7.8 | 3.1 | 83 | 0.25 |
| B25 | zinc permanganate+zinc orthosilicate | 25 | 100 | 1 | 13 | cationic urethane resin | 30 | 0.50 | 5.0 | 0.6 | 87 | 11.31 |
| B26 | none | - | - | 1 | 1.5 | cationic urethane resin | 30 | 0.68 | 8.0 | 2.8 | 3 | 0.05 |
| B27 | none | - | - | 1 | 1.5 | none | 30 | 0.68 | 8.0 | 2.5 | 12 | 0.18 |

As is understood from Table 6, it has been found that all the Al-plated steel sheets 100 (Sample Nos. B1 to B19) within the scope of the invention achieved good results of all the four evaluations, where: the intermediate coating layer 105 formed on the surface of the Al-plating layer 103 contained an oxoacid salt; the deposition thickness of the coating layer was in a range of 10 nm or more and 500 nm or less; the surface coating layer 107 formed on the surface of the intermediate coating layer 105 contained the ZnO particles 109 with a mean particle size of 0.10 µm or more and 5.00 µm or less, and the organic resin 111; and the amount of coating of the ZnO particles 109 was in a range of 0.5 g/m² or more and 10.0 g/m² or less.

In contrast, it has been found that none of the Al-plated steel sheets 100 (Sample Nos. B20 to B27) out of the scope of the invention achieved a good result of at least one of the above four evaluations (the variety of properties and disappearance test of ZnO), where the intermediate coating layer 105 was not formed or one of the mean particle size of the ZnO particles 109, the amount of coating of the ZnO particles 109, and the like was out of the predetermined range according to the invention.

Specifically, Sample No. B20 was poor in residual amount of ZnO, lubicity of hot working, and corrosion resistance of painted steel due to the excessively small film thickness of the intermediate coating layer 105.

Sample No. B21 was poor in corrosion resistance of painted steel due to the excessively large film thickness of the intermediate coating layer 105.

Sample No. B22 was poor in lubicity of hot working due to the excessively small mean particle size of the ZnO particles 109.

Sample No. B23 was poor in spot weldability due to the excessively large mean particle size of the ZnO particles 109.

Sample No. B24 was poor in lubicity of hot working and corrosion resistance of painted steel due to the excessively small amount of coating of the ZnO particles 109.

Sample No. B25 was poor in spot weldability due to the excessively large amount of coating of the ZnO particles 109.

Sample No. B26 was poor in residual amount of ZnO, lubicity of hot working, and corrosion resistance of painted steel due to the absence of the intermediate coating layer 105.

Sample No. B27 was poor in residual amount of ZnO, lubicity of hot working, and corrosion resistance of painted steel due to the absence of the intermediate coating layer 105 and the organic resin 111.

### Example C

A cold-rolled steel sheet with chemical components shown in Table 7 (balance: Fe and inevitable impurities, thickness: 1.4 mm) was used as the base 101. The Al-plating layer 103 was formed on each of opposite surfaces of the cold-rolled steel sheet using a typical Al-plating bath by Sendzimir process. An annealing temperature for forming the Al-plating layer 103 was approximately 800 °C.

An amount of the Al-plating layer 103 adhering to the base 101 was adjusted to 160 g/m² per each surface by gas wiping.

**Table 7**

| Element | C | Si | Mn | P | S | Ti | B | Al | N |
|---|---|---|---|---|---|---|---|---|---|
| Content (mass%) | 0.22 | 0.12 | 1.25 | 0.01 | 0.005 | 0.02 | 0.003 | 0.04 | 0.0005 |

Next, after the base 101 with the Al-plating layer 103 formed thereon was cooled, the intermediate coating layer 105 and surface coating layer 107 shown in Table 8 were formed. To form each of the intermediate coating layer 105 and the surface coating layer 107, a solution prepared by blending the components shown in Table 8 in a solvent was sequentially applied to the surface of the Al-plating layer 103 using a roll coater and burnt at approximately 80 °C. For Sample Nos. C22 and C23, no intermediate coating layer 105 was formed.

It should be noted that specific compositions of the solutions were as follows. The solutions with the following compositions were each prepared by blending a commercially available reagent with distilled water.
Sample Nos. C1, C7 to C14 and C18 to C21:
   0.5% AlF₃ aqueous solution
Sample No. C2:
   0.2% LiF aqueous solution
Sample No. C3:
   3% NaF aqueous solution
Sample No. C4:
   5% KF aqueous solution
Sample No. C5:
   0.1% MgF + HNO₃ aqueous solution, pH 2
Sample No. C6:
   0.1% CaF + HNO₃ aqueous solution, pH 2
Sample No. C15:
   0.5% FeF₂ aqueous solution
Sample No. C16:
   1% ZnF₂·4H₂O aqueous solution
Sample No. C17:
   0.5% NiF₂ aqueous solution

Subsequently, the surface coating layer 107 was formed by applying, on the Al-plating layer 103 with the intermediate coating layer 105 formed thereon, a solution prepared by blending a dispersant of the ZnO particles 109 (manufactured by SAKAI CHEMICAL INDUSTRY CO., LTD., trade name: DIF-3ST4S) and a cationic urethane resin (manufactured by DKS Co. Ltd., trade name: SUPERFLEX 650; liquid) as the organic resin 111 using a roll coater, and drying the solution such that a sheet temperature reached 80 °C in the same manner as when the intermediate coating layer 105 was formed. The surface coating layer 107 containing the organic resin 111 in an amount of 30 mass% (ZnO: 70 mass%) was thus formed. For Sample No. C23, only the dispersant for the ZnO particles 109 was applied and dried at 80 °C.

### Measurement Conditions

The composition of the intermediate coating layer 105, the F coating weight, the particle size of the ZnO particles 109, and the ZnO coating weight were identified as follows.

### 1. Composition of Intermediate Coating Layer 105

The composition of the layered double hydroxide was identified by comparing peak with ICDD data, the peak being determined by a thin-film method using an X-ray diffractometer manufactured by Rigaku Corporation (trade name: SmartLab 3) with Cu-Kα beam (incident angle: 90 degrees).

### 2. F coating weight

An F coating weight per unit area was measured by a calibration curve method using a scanning X-ray fluorescence analyzer manufactured by Rigaku Corporation (trade name: ZSX Primes). For the measurement, a calibration curve was created in advance that represented a relationship between the F coating weight and intensity of specific X-ray and the amount of coating was determined with reference to the calibration curve.

### 3. Particle Size of ZnO Particles 109

The ZnO particles 109 were observed at 2000-fold magnification with a scanning electron microscope manufactured by JEOL Ltd. (trade name: JSM-7800F) and respective maximum diameters of 20 of the ZnO particles 109 were measured and averaged. The average value was defined as the particle size of the ZnO particles 109.

### 4. ZnO Coating Weight

The ZnO coating weight was measured with an X-ray fluorescence analyzer manufactured by Rigaku Corporation (trade name: ZSX Primus) under the following conditions. For the measurement, a calibration curve was created in advance that represented a relationship between the Zn content and intensity of X-ray fluorescence and the amount of coating was determined with reference to the calibration curve.
- measurement diameter: 30 mm
- measurement atmosphere: vacuum
- spectrum: Zn-Ka

The number of counted peaks of Zn-Ka of X-ray fluorescence analysis measured under the above conditions was referred to.

### Evaluation of Samples

Next, the samples produced as described above were evaluated by the following methods in terms of a variety of properties.

### (1) Lubricity of Hot Working

For evaluation of lubicity of hot working, each sample was subjected to a hot mold-pulling test.
Each 30 mm × 350 mm sample steel sheet was put in a furnace and heated at 900 °C for 6 minutes while sandwiched between two SiC plates (60 mm width × 200 mm length × 30 mm thickness) and taken out of the furnace. A flat dice (width: 50 mm width × length: 40 mm) of SKD11 was then pressed against opposite surfaces of the steel sheet at approximately 700 °C for a pulling process. A pressing load and a pulling load were measured and a value calculated by pulling load/(2 × pressing load) was defined as a friction coefficient for hot working. A friction coefficient for hot working of less than 0.52 was evaluated to pass.

### (2) Corrosion Resistance of Painted Steel

Each 120 mm × 200 mm sample was put in a furnace and placed on an in-furnace SiC pedestal with an evaluation surface of the steel sheet in contact with the pedestal. The sample was then heated in the furnace at 900 °C for 6 minutes with a SUS304 block (50 mm × 50 mm ×70 mm) having been heated to 900 °C placed thereon. Immediately after taken out of the furnace, the sample was sandwiched between a stainless steel mold for rapid cooling. The cooling rate was approximately 150 °C/sec. Next, each steel sheet having been cooled was cut from a center thereof into a 70 mm × 150 mm piece. After subjected to a chemical conversion treatment with a chemical conversion solution (PB-SX35) manufactured by Nihon Parkerizing Co., Ltd., the piece was coated with a electrodeposition paint (POWERNICS 110) manufactured by Nippon Paint Co., Ltd. such that a thickness of the piece reached 20 µm, and burnt at 170 °C. It should be noted that each 70 mm × 150 mm sample with a thermocouple welded thereto was put in an air atmosphere furnace whose temperature was set to 900 °C, and a temperature of the sample was measured until it reached 900 °C to calculate an averate heating rate. The averate heating rate was 5 °C/sec.

Evaluation of corrosion resistance of painted steel was performed by a method in accordance with JASO M609 instituted by Society of Automotive Engineers of Japan, Inc. Specifically, a film was cross-cut in advance with a box-cutter, and a width (maximum value on one side) of blistering of the film from the cross cut was measured after the elapse of 180 cycles of a corrosion test (60 days). A width of 5.0 mm or less was evaluated to pass.

### (3) Spot Weldability

Spot weldability was evaluated as follows.

The prepared samples were each put in a furnace and heated therein at 900 °C for 6 minutes. The samples were then each sandwiched by a stainless steel mold for rapid cooling immediately after taken out of the furnace. The cooling rate was approximately 150 °C/sec. Each cooled steel sheet was cut into a 30 mm × 50 mm piece for measurement of a suitable current range for spot welding (maximum current to minimum current). The measurement conditions were as follows. A current value achieving a nugget diameter of 3 × (t)^{0.5} was defined as the minimum current, whereas a current causing expulsion was defined as the maximum current. A current range of 1.0 A or more was evaluated to pass.
- current: DC
- electrode: made of chrome copper, DR (40R/6-mm-diameter tip end)
- compression: 400 kgf (1kgf = 9.8N)
- power supply time: 240 milliseconds

### (4) Disappearance Test of ZnO (Residual Ratio and Residual Amount of ZnO)

Each sample was punched into a diameter of 30 mm, and stacked on a 70 mm × 70 mm in-furnace SiC pedestal while a 50 mm × 50 mm × 70 mm SUS304 block having been heated to 900 °C was placed thereon. The sample in this state was then heated in a furnace at 900 °C for 6 minutes, and sandwiched by a stainless steel mold for rapid cooling immediately after taken out of the furnace. Values of Zn coating weight before and after the heating were measured with XRF. The Zn coating weight (residual amount) and the ratio of residual amount of ZnO were calculated. A residual amount of 0.4 g/m² or more was evaluated to pass.

Table 8 shows the results.

**Table 8**

| Sample No. | intermediate coating layer 105 (fluoride salt) | | surface coating layer 107 | | | | lubricity for hot working | corrosion resistance of painted steel | spot weldability | ZnO Disappearance Test | |
|---|---|---|---|---|---|---|---|---|---|---|---|
| | type | F coating weight (mg/m²) | ZnO | | organic resin | | | | | | |
| | | | mean particle size of ZnO (*µ*m) | Zn coating weight (g/m²) | resin species | ratio (mass%) | | | | ratio of residual amount (unit area%) | residual amount of Zn (g/m²) |
| C1 | AlF₃ | 100 | 1 | 1.5 | cationic urethane resin | 30 | 0.48 | 2.3 | 2.7 | 89 | 1.34 |
| C2 | LiF | 100 | 1 | 1.5 | cationic urethane resin | 30 | 0.48 | 2.5 | 2.7 | 85 | 1.28 |
| C3 | NaF | 100 | 1 | 1.5 | cationic urethane resin | 30 | 0.49 | 2.4 | 2.9 | 86 | 1.29 |
| C4 | KF | 100 | 1 | 1.5 | cationic urethane resin | 30 | 0.48 | 2.4 | 2.8 | 86 | 1.29 |
| C5 | MgF₂ | 100 | 1 | 1.5 | cationic urethane resin | 30 | 0.47 | 2.5 | 2.8 | 87 | 1.31 |
| C6 | CaF₂ | 100 | 1 | 1.5 | cationic urethane resin | 30 | 0.47 | 2.5 | 2.9 | 85 | 1.28 |
| C7 | AlF₃ | 20 | 1 | 1.5 | cationic urethane resin | 30 | 0.48 | 2.6 | 2.9 | 84 | 1.26 |
| C8 | AlF₃ | 2000 | 1 | 1.5 | cationic urethane resin | 30 | 0.47 | 2.7 | 2.7 | 90 | 1.35 |
| C9 | AlF₃ | 100 | 0.1 | 1.5 | cationic urethane resin | 30 | 0.47 | 2.5 | 2.9 | 89 | 1.34 |
| C10 | AlF₃ | 100 | 5 | 1.5 | cationic urethane resin | 30 | 0.50 | 2.6 | 2.7 | 88 | 1.32 |
| C11 | AlF₃ | 100 | 1 | 0.5 | cationic urethane resin | 30 | 0.50 | 4.8 | 3.0 | 88 | 0.44 |
| C12 | AlF₃ | 100 | 1 | 10 | cationic urethane resin | 30 | 0.44 | 2.5 | 1.4 | 87 | 8.70 |
| C13 | AlF₃ | 2100 | 1 | 1.5 | cationic urethane resin | 30 | 0.50 | 2.9 | 2.6 | 84 | 1.26 |
| C14 | AlF₃ | 19 | 1 | 1.5 | cationic urethane resin | 30 | 0.59 | 6.9 | 3.0 | 19 | 0.29 |
| C15 | FeF₂ | 100 | 1 | 1.5 | cationic urethane resin | 30 | 0.60 | 7.0 | 2.8 | 19 | 0.29 |
| C16 | ZnF₂ | 100 | 1 | 1.5 | cationic urethane resin | 30 | 0.63 | 7.7 | 2.8 | 13 | 0.20 |
| C17 | NiF₂ | 100 | 1 | 1.5 | cationic urethane resin | 30 | 0.62 | 7.3 | 2.7 | 16 | 0.24 |
| C18 | AlF₃ | 100 | 1 | 0.4 | cationic urethane resin | 30 | 0.57 | 6.4 | 3.0 | 87 | 0.35 |
| C19 | AlF₃ | 100 | 1 | 11 | cationic urethane resin | 30 | 0.44 | 2.9 | 0.8 | 92 | 10.1 |
| C20 | AlF₃ | 100 | 0.06 | 1.5 | cationic urethane resin | 30 | 0.59 | 2.4 | 2.9 | 87 | 1.31 |
| C21 | AlF₃ | 100 | 8 | 1.5 | cationic urethane resin | 30 | 0.49 | 2.5 | 0.6 | 85 | 1.28 |
| C22 | none | - | 1 | 1.5 | cationic urethane resin | 30 | 0.68 | 8.0 | 2.8 | 3 | 0.05 |
| C23 | none | - | 1 | 1.5 | none | 30 | 0.68 | 8.0 | 2.5 | 12 | 0.18 |

As is understood from Table 8, it has been found that all the Al-plated steel sheets (Sample Nos. C1 to C13) within the scope of the invention achieved good results of all the four evaluations (the variety of properties and disappearance test of ZnO), where the intermediate coating layer 105 containing a fluoride salt of at least one of aluminum, alkali metal or alkaline earth metal and the surface coating layer 107 containing at least ZnO were sequentially formed on the surface of the Al-plating layer 103.

In contrast, it has been found that none of the Al-plated steel sheets (Sample Nos. C14 to C23) out of the scope of the invention achieved good results of the four evaluations.

Specifically, Sample No. C14 was poor in lubicity of hot working and corrosion resistance of painted steel due to the excessively small F coating weight.

Sample Nos. C15, C16 and C17 were poor in residual amount of ZnO, lubicity of hot working, and corrosion resistance of painted steel due to the use of a fluoride salt of a substance other than aluminum, alkali metal, and alkaline earth metal to form the intermediate coating layer 105.

Sample No. C18 was poor in residual amount of ZnO, lubicity of hot working, and corrosion resistance of painted steel due to the excessively small ZnO coating weight.

Sample No. C19 was poor in spot weldability due to the excessively large ZnO coating weight.

Sample No. C20 was poor in lubicity of hot working due to the excessively small mean particle size of ZnO.

Sample No. C21 was poor in spot weldability due to the excessively large mean particle size of ZnO.

Sample No. C22 was poor in residual amount of ZnO, lubicity of hot working, and corrosion resistance of painted steel due to the absence of the intermediate coating layer 105.

Sample No. C23 was poor in residual amount of ZnO, lubicity of hot working, and corrosion resistance of painted steel due to the absence of the intermediate coating layer 105 and the resin 111.

Furthermore, it has been found that the composition with a fluorine amount being in range of 20 mg/m² or more and 2000 mg/m² or less, (Sample Nos. C1 to C12) and the composition with a ZnO amount in the surface coating layer 107 being in a range of 0.5 g/m² or more and 10.0 g/m² or less, in terms of Zn content achieved superior results.

### Example D

First, samples designated with Sample Nos. D1 to D26 were prepared under the following conditions.

A cold-rolled steel sheet (thickness: 1.4 mm) with chemical components shown in Table 9 (balance: Fe and inevitable impurities) was used as the base 101. The Al-plating layer 103 (60 µm) was formed on each of opposite surfaces of the cold-rolled steel sheet using a typical Al-plating bath by Sendzimir process. An annealing temperature for forming the Al-plating layer 103 was approximately 800 °C.

It should be noted that the amount of coating of the Al-plating layer 103 on the base 101 was adjusted to 160 g/m² per each surface by gas wiping.

**Table 9**

| Element | C | Si | Mn | P | S | Ti | B | Al | N |
|---|---|---|---|---|---|---|---|---|---|
| Content (mass%) | 0.22 | 0.12 | 1.25 | 0.01 | 0.005 | 0.02 | 0.003 | 0.04 | 0.0005 |

Next, after the base 101 with the Al-plating layer 103 formed thereon was cooled, the intermediate coating layer 105 was formed on the surface of the Al-plating layer 103. The intermediate coating layer 105 was formed by immersing the base 101 in an aqueous solution with pH of 8 or higher containing Aⁿ⁻ ion and M²⁺ ion shown in Table 10 for 2 to 30 seconds (Sample Nos. D1 to D14 and D18 to D24) or by applying this aqueous solution using a bar coater and drying it in an furnace with a temperature of 200 °C such that a sheet temperature reached 80 °C (Sample Nos. D15 to D17). For Sample Nos. B25 and B26, no intermediate coating layer 105 was formed.

It should be noted that specific compositions of the solutions were as follows. The solutions with the following compositions were each prepared by blending a commercially available reagent with distilled water.
Sample Nos. D1 to D3 and D18 to D24
   saturated calcium hydroxide and 5% NaCl solution, pH 12.5
Sample No. D4
   saturated magnesium hydroxide, 5% diluted ammonia water (content ratio: 20% or more and 30% or less), and 5% NaCl solution, pH 11
Sample No. D5
   saturated barium hydroxide and 5% NaCl solution, pH 13
Sample No. D6
   an aqueous solution containing ferric chloride in an amount of 10⁻⁶ mol/L and ammonia water with an adjusted pH of 8.5
Sample No. D7
   saturated nickel hydroxide, 5% ammonia water (content ratio: 20% or more and 30% or less), and 5% NaCl solution, pH 11
Sample No. D8
   saturated copper hydroxide, 5% ammonia water (content ratio: 20% or more and 30% or less), and 5% NaCl solution, pH 11
Sample No. D9
   saturated calcium hydroxide and 5% Na₂SO₄ aqueous solution, pH 12.5 Sample No. D10
   saturated calcium carbonate and 5% ammonium hydrogen carbonate aqueous solution, pH 10.5
Sample Nos. D11 to D14
   saturated calcium hydroxide aqueous solution, pH 12.5
Sample No. D15
   a CaCO₃ aqueous solution with a concentration of 10 g/L
Sample No. D16
   a CaCO₄ aqueous solution with a concentration of 10 g/L
Sample No. D17
   a saturated MgCO₃ aqueous solution

Subsequently, the surface coating layer 107 was formed by applying, on the Al-plating layer 103 with the intermediate coating layer 105 formed thereon, a solution prepared by blending a dispersant of the ZnO particles 109 (manufactured by SAKAI CHEMICAL INDUSTRY CO., LTD., trade name: DIF-3ST4S) and a cationic urethane resin (manufactured by DKS Co. Ltd., trade name: SUPERFLEX 650; liquid) as the organic resin 111 using a roll coater, and drying the solution such that a sheet temperature reached 80 °C in the same manner as when the intermediate coating layer 105 was formed. The surface coating layer 107 containing the organic resin 111 in an amount of 30 mass% (ZnO: 70 mass%) was thus formed. For Sample Nos. B22 and D26, only the dispersant for the ZnO particles 109 was applied and dried at 80 °C.

Sample Al-plated steel sheets 100 were thus produced.

**Table 10**

| Sample No. | intermediate coating layer 105 | | | | | | | surface coating layer 107 | | | |
|---|---|---|---|---|---|---|---|---|---|---|---|
| | | | | | | | | ZnO particles | 109 | organic resin 111 | |
| | M²⁺ | Aⁿ⁻ | Al layered double hydroxide | M coating weight (mg/m²) | x in Formula 1 | n in Formula 1 | m in Formula 1 | mean particle size of ZnO (*µ*m) | Zn coating weight (g/m²) | resin species 111 | ratio (mass%) |
| D1 | Ca²⁺ | Cl⁻ | Ca₂Al(OH)₆Cl ·2H₂O | 10 | 1/3 | 1 | 2/3 | 1 | 1.5 | cationic urethane resin | 30 |
| D2 | Ca²⁺ | Cl⁻ | Ca₂Al(OH)₆Cl ·2H₂O | 1000 | 1/3 | 1 | 2/3 | 1 | 1.5 | cationic urethane resin | 30 |
| D3 | Ca²⁺ | Cl⁻ | Ca₂Al(OH)₆Cl ·2H₂O | 50 | 1/3 | 1 | 2/3 | 1 | 1.5 | cationic urethane resin | 30 |
| D4 | Mg²⁺ | Cl⁻ | Mg₂Al(OH)₆Cl ·2H₂O | 50 | 1/3 | 1 | 2/3 | 1 | 1.5 | cationic urethane resin | 30 |
| D5 | Ba²⁺ | Cl⁻ | Ba₂Al(OH)₆Cl ·2H₂O | 50 | 1/3 | 1 | 2/3 | 1 | 1.5 | cationic urethane resin | 30 |
| D6 | Fe²⁺ | Cl⁻ | Fe₂Al(OH)₆Cl ·2H₂O | 50 | 1/3 | 1 | 2/3 | 1 | 1.5 | cationic urethane resin | 30 |
| D7 | Ni²⁺ | Cl⁻ | Ni₂Al(OH)₆Cl ·2H₂O | 50 | 1/3 | 1 | 2/3 | 1 | 1.5 | cationic urethane resin | 30 |
| D8 | Cu²⁺ | Cl⁻ | Cu₂Al(OH)₆Cl ·2H₂O | 50 | 1/3 | 1 | 2/3 | 1 | 1.5 | cationic urethane resin | 30 |
| D9 | Ca²⁺ | SO₄²⁻ | Ca₂Al(OH)₆(SO₄)^{1/2} ·2H₂O | 50 | 1/3 | 2 | 2/3 | 1 | 1.5 | cationic urethane resin | 30 |
| D10 | Ca²⁺ | CO₃²⁻ | Ca₂Al(OH)₆(CO₃)^{1/2} ·2H₂O | 50 | 1/3 | 2 | 2/3 | 1 | 1.5 | cationic urethane resin | 30 |
| D11 | Ca²⁺ | OH⁻ | Ca₂Al(OH)₆OH ·2H₂O | 50 | 1/3 | 1 | 2/3 | 0.1 | 1.5 | cationic urethane resin | 30 |
| D12 | Ca²⁺ | OH⁻ | Ca₂Al(OH)₆OH ·2H₂O | 50 | 1/3 | 1 | 2/3 | 5 | 1.5 | cationic urethane resin | 30 |
| D13 | Ca²⁺ | OH⁻ | Ca₂Al(OH)₆OH ·2H₂O | 50 | 1/3 | 1 | 2/3 | 1 | 0.5 | cationic urethane resin | 30 |
| D14 | Ca²⁺ | OH⁻ | Ca₂Al(OH)₆OH ·2H₂O | 50 | 1/3 | 1 | 2/3 | 1 | 10 | cationic urethane resin | 30 |
| D15 | - | - | none (CaCO₃) | 200 | - | - | - | 1 | 1.5 | cationic urethane resin | 30 |
| D16 | - | - | none (CaSO₄) | 200 | - | - | - | 1 | 1.5 | cationic urethane resin | 30 |
| D17 | - | - | none (MgCO₃) | 200 | - | - | - | 1 | 1.5 | cationic urethane resin | 30 |
| D18 | Ca²⁺ | Cl⁻ | Ca₂Al(OH)₆Cl ·2H₂O | 50 | 1/3 | 1 | 2/3 | 0.06 | 1.5 | cationic urethane resin | 30 |
| D19 | Ca²⁺ | Cl⁻ | Ca₂Al(OH)₆Cl ·2H₂O | 50 | 1/3 | 1 | 2/3 | 8 | 1.5 | cationic urethane resin | 30 |
| D20 | Ca²` | Cl⁻ | Ca₂Al(OH)₆Cl ·2H₂O | 50 | 1/3 | 1 | 2/3 | 1 | 0.3 | cationic urethane resin | 30 |
| D21 | Ca²⁺ | Cl⁻ | Ca₂Al(OH)₆Cl ·2H₂O | 50 | 1/3 | 1 | 2/3 | 1 | 13 | cationic urethane resin | 30 |
| D22 | Ca²⁺ | Cl⁻ | Ca₂Al(OH)₆Cl ·2H₂O | 50 | 1/3 | 1 | 2/3 | 1 | 1.5 | none | - |
| D23 | Ca²⁺ | Cl⁻ | Ca₂Al(OH)₆Cl ·2H₂O | 9 | 1/3 | 1 | 2/3 | 1 | 1.5 | cationic urethane resin | 30 |
| D24 | Ca²⁺ | Cl⁻ | Ca₂Al(OH)₆Cl ·2H₂O | 1005 | 1/3 | 1 | 2/3 | 1 | 1.5 | cationic urethane resin | 30 |
| D25 | - | - | none | - | - | - | - | 1 | 1.5 | cationic urethane resin | 30 |
| D26 | - | - | none | - | - | - | - | 1 | 1.5 | none | - |

It should also be noted that the term "ZnO Coating Weight" in Table 10 means a metallic-zinc-mass equivalent (unit: g/m²) of a total amount of coating of the ZnO particles 109 per square meter of the intermediate coating layer 105.

### Measurement Conditions

The composition of the intermediate coating layer 105, the M coating weight, the particle size of the ZnO particles 109, and the ZnO coating weight were identified as follows.

### 1. Composition of Intermediate Coating Layer 105

The composition of the layered double hydroxide was identified by comparing peak with ICDD data, the peak being determined by a thin-film method using an X-ray diffractometer manufactured by Rigaku Corporation (trade name: SmartLab 3) with Cu-Kα beam (incident angle: 90 degrees).

### 2. M Coating Weight

The M coating weight was measured with an X-ray fluorescence analyzer manufactured by Rigaku Corporation (trade name: ZSX Primus) under the following conditions. For the measurement, a calibration curve was created in advance that represented a relationship between the M content and intensity of X-ray fluorescence and the amount of coating was determined with reference to the calibration curve.
- measurement diameter: 30 mm
- measurement atmosphere: vacuum
- spectrum: M-Kα

The number of counted peaks of M-Ka of X-ray fluorescence analysis measured under the above conditions was referred to.

### 3. Particle Size of ZnO Particles 109

The ZnO particles 109 were observed at 2000-fold magnification with a scanning electron microscope manufactured by JEOL Ltd. (trade name: JSM-7800F) and respective maximum diameters of 20 of the ZnO particles 109 were measured and averaged. The average value was defined as the particle size of the ZnO particles 109.

### 4. ZnO Coating Weight

The ZnO coating weight was measured with an X-ray fluorescence analyzer manufactured by Rigaku Corporation (trade name: ZSX Primus) under the following conditions. For the measurement, a calibration curve was created in advance that represented a relationship between the amount of Zn and intensity of X-ray fluorescence and the amount of coating was determined with reference to the calibration curve.
- measurement diameter: 30 mm
- measurement atmosphere: vacuum
- spectrum: Zn-Kα

The number of counted peaks of Zn-Ka of X-ray fluorescence analysis measured under the above conditions was referred to.

### Evaluation of Samples

Next, the samples produced as described above were evaluated by the following methods in terms of a variety of properties.

### (1) Lubricity of Hot Working

For evaluation of lubicity of hot working, each sample was subjected to a hot mold-pulling test.

Each 30 mm × 350 mm sample was put in a furnace and heated at 900 °C for 6 minutes while sandwiched between two SiC plates (60 mm width × 200 mm length × 30 mm thickness) and taken out of the furnace. A flat dice (width: 50 mm width × length: 40 mm) of SKD11 was then pressed against opposite surfaces of the steel sheet at approximately 700 °C for a pulling process. A pressing load and a pulling load were measured and a value calculated by pulling load/(2 × pressing load) was defined as a friction coefficient for hot working. A friction coefficient for hot working of less than 0.52 was evaluated to pass.

### (2) Corrosion Resistance of Painted Steel

Each 120 mm × 200 mm sample was put in a furnace and placed on an in-furnace SiC pedestal with an evaluation surface of the sample in contact with the pedestal. The sample was then heated in the furnace at 900 °C for 6 minutes with a SUS304 block (50 mm × 50 mm ×70 mm) having been heated to 900 °C placed thereon. Immediately after taken out of the furnace, the sample was sandwiched between a stainless steel mold for rapid cooling. The cooling rate was approximately 150 °C/sec. Next, each steel sheet having been cooled was cut from a center thereof into a 70 mm × 150 mm piece. After subjected to a chemical conversion treatment with a chemical conversion solution (PB-SX35) manufactured by Nihon Parkerizing Co., Ltd., the piece was coated with a electrodeposition paint (POWERNICS 110) manufactured by Nippon Paint Co., Ltd. such that a thickness of the piece reached 20 µm, and burnt at 170 °C. It should be noted that each 70 mm × 150 mm sample with a thermocouple welded thereto was put in an air atmosphere furnace whose temperature was set to 900 °C, and a temperature of the sample was measured until it reached 900 °C to calculate an averate heating rate. The averate heating rate was 5 °C/sec.

Evaluation of corrosion resistance of painted steel was performed by a method in accordance with JASO M609 instituted by Society of Automotive Engineers of Japan, Inc. Specifically, a film was cross-cut in advance with a box-cutter, and a width (maximum value on one side) of blistering of the film from the cross cut was measured after the elapse of 180 cycles of a corrosion test (60 days). A width of 5.0 mm or less was evaluated to pass.

### (3) Spot Weldability

The prepared samples were each put in a furnace and heated therein at 900 °C for 6 minutes. The samples were then each sandwiched by a stainless steel mold for rapid cooling immediately after taken out of the furnace. The cooling rate was approximately 150 °C/sec. Each cooled sample was cut into a 30 × 50 mm piece for measurement of a suitable current range for spot welding (maximum current to minimum current). The measurement conditions were as follows. A current value achieving a nugget diameter of 3 × (t)^{0.5} was defined as the minimum current, whereas a current causing expulsion was defined as the maximum current. A current range of 1.0 A or more was evaluated to pass.
- current: DC
- electrode: made of chrome copper, DR (40R/6-mm-diameter tip end)
- compression: 400 kgf (1kgf = 9.8N)
- power supply time: 240 milliseconds

### (4) Disappearance Test of ZnO (Residual Ratio and Residual Amount of ZnO)

Each sample was punched into a diameter of 30 mm, and stacked on a 70 mm × 70 mm in-furnace SiC pedestal while a 50 mm × 50 mm × 70 mm SUS304 block having been heated to 900 °C was placed thereon. The sample in this state was then heated in a furnace at 900 °C for 6 minutes, and sandwiched by a stainless steel mold for rapid cooling immediately after taken out of the furnace. Values of Zn coating weight before and after the heating were measured with XRF. The residual ratio was calculated as well as the Zn coating weight. A residual amount of 0.4 g/m² or more was evaluated to pass.

Table 11 shows the results.

**Table 11**

| Sample No. | Evaluation Tes | | | | |
|---|---|---|---|---|---|
| | Lubricity for Hot Working | Corrosion Resistance of Painted Steel | Spot Weldability | ZnO Disappearance Test | |
| | | | | Ratio of Residual Amount of Zn (%) | Residual Amount of Zn (g/m²) |
| D1 | 0.46 | 2.5 | 2.8 | 83 | 1.25 |
| D2 | 0.46 | 2.5 | 2.7 | 87 | 1.31 |
| D3 | 0.46 | 2.2 | 2.7 | 86 | 1.29 |
| D4 | 0.46 | 2.5 | 2.8 | 84 | 1.26 |
| D5 | 0.45 | 2.5 | 2.8 | 84 | 1.26 |
| D6 | 0.45 | 2.5 | 2.8 | 83 | 1.25 |
| D7 | 0.47 | 2.5 | 2.8 | 82 | 1.23 |
| D8 | 0.46 | 2.5 | 2.7 | 82 | 1.23 |
| D9 | 0.47 | 2.6 | 2.7 | 83 | 1.25 |
| D10 | 0.45 | 2.4 | 2.7 | 83 | 1.25 |
| D11 | 0.49 | 2.2 | 2.6 | 82 | 1.23 |
| D12 | 0.45 | 2.9 | 2.5 | 83 | 1.25 |
| D13 | 0.49 | 4.8 | 3.0 | 83 | 0.42 |
| D14 | 0.43 | 2.2 | 1.4 | 84 | 8.40 |
| D15 | 0.53 | 7.4 | 2.8 | 15 | 0.23 |
| D16 | 0.54 | 7.6 | 2.8 | 13 | 0.20 |
| D17 | 0.54 | 7.5 | 2.7 | 14 | 0.21 |
| D18 | 0.52 | 3.3 | 2.8 | 86 | 1.29 |
| D19 | 0.49 | 2.5 | 0.6 | 85 | 1.28 |
| D20 | 0.56 | 4.5 | 3.0 | 86 | 0.26 |
| D21 | 0.43 | 2.2 | 0.8 | 86 | 11.18 |
| D22 | 0.52 | 3.4 | 2.9 | 86 | 0.35 |
| D23 | 0.56 | 4.6 | 2.8 | 21 | 0.32 |
| D24 | 0.46 | 2.3 | 0.6 | 86 | 1.29 |
| D25 | 0.68 | 8.0 | 2.8 | 3 | 0.05 |
| D26 | 0.68 | 8.0 | 2.5 | 12 | 0.18 |

As is understood from Table 11, it has been found that all the Al-plated steel sheets 100 (Sample Nos. D1 to D14) within the scope of the invention achieved good results of all the four evaluations, where: the amount of coating of the intermediate coating layer 105 of Al layered double hydroxide ([M²⁺₁₋ₓAl³⁺ₓ(OH)₂][Aⁿ⁻_{x/n}·mH₂O]) formed on the surface of the Al-plating layer 103 was in a range of 10 mg/m² or more and 1000 mg/m² or less in terms of metal M; the surface coating layer 107 formed on the surface of the intermediate coating layer 105 contained the ZnO particles 109 with a mean particle size of 0.10 µm or more and 5.00 µm or less and the organic resin 111; and the amount of coating of the ZnO particles 109 was in a range of 0.5 g/m² or more and 10.0 g/m² or less in terms of metallic zinc.

In contrast, it has been found that none of the Al-plated steel sheets 100 without the intermediate coating layer 105 (Sample Nos. D25 and D26) and the Al-plated steel sheets 100 (Sample Nos. D18 to D24) out of the scope of the invention where the mean particle size of the ZnO particles 109, the amount of coating of the ZnO particles 109, or the like was out of the predetermined range according to the invention achieved a good result of at least one of the above four evaluations.

Specifically, Sample Nos. D15, D16 and D17, for which calcium carbonate, calcium sulfate, or magnesium carbonate was formed on the surface of the Al-plating layer 103 in place of the Al layered double hydroxide, was poor in lubicity of hot working, corrosion resistance of painted steel, and residual amount of ZnO.

Sample No. D18 was poor in lubicity of hot working due to the excessively small mean particle size of ZnO.

Sample No. D19 was poor in spot weldability due to the excessively large mean particle size of ZnO.

Sample No. D20 was poor in residual amount of ZnO and lubicity of hot working due to the excessively small ZnO coating weight.

Sample No. D21 was poor in spot weldability due to the excessively large ZnO coating weight.

Sample No. D22 was poor in residual amount of ZnO and lubicity of hot working due to the absence of the resin 111.

Sample No. D23 was poor in residual amount of ZnO and lubicity of hot working due to the excessively small ZnO coating weight.

Sample No. D24 was poor in spot weldability due to the excessively large M coating weight.

Sample No. D25 was poor in residual amount of ZnO, corrosion resistance of painted steel, and lubicity of hot working due to the absence of the intermediate coating layer 105.

Sample No. D26 was poor in residual amount of ZnO, corrosion resistance of painted steel, and lubicity of hot working due to the absence of the resin 111 and the intermediate coating layer 105.

### Example E

A cold-rolled steel sheet (thickness: 1.4 mm) with chemical components shown in Table 12 (balance: Fe and inevitable impurities) was used. The Al-plating layer 103 was formed on each of opposite surfaces of the cold-rolled steel sheet using a typical Al-plating bath by Sendzimir process. An annealing temperature for forming the Al-plating layer 103 was approximately 800 °C.

It should be noted that an amount of the Al-plating layer 103 adhering to the base 101 was adjusted to 160 g/m² per each surface by gas wiping.

**Table 12**

| C | Si | Mn | P | S | Ti | B | Al | N |
|---|---|---|---|---|---|---|---|---|
| 0.22 | 10.12 | 1.25 | 0.01 | 0.005 | 0.02 | 0.003 | 0.04 | 0.0005 |

Next, after the base 101 with the Al-plating layer 103 formed thereon was cooled, the intermediate coating layer 105 shown in Table 13 was formed. For Sample Nos. E1 to E23, the intermediate coating layer 105 was formed on the surface of the Al-plating layer 103 by chemical vapor deposition under the conditions shown in Table 13. The film thickness was controlled on a basis of vapor deposition time. For Sample Nos. E24 and E25, no intermediate coating layer 105 was formed. For Sample No. E26, the intermediate coating layer 105 was not formed by vapor deposition but an Al₂O₃ metallic coating was formed by atmospheric oxidation at 300 °C for 24 hours instead.

Subsequently, for Sample Nos. E1 to E23 and E26, the surface coating layer 107 was formed by applying, on the intermediate coating layer 105 formed on the Al-plating layer 103, a solution prepared by blending a dispersant of the ZnO particles 109 (manufactured by SAKAI CHEMICAL INDUSTRY CO., LTD., trade name: DIF-3ST4S) and a cationic urethane resin (manufactured by DKS Co. Ltd., trade name: SUPERFLEX 650) as the organic resin 111 using a roll coater, and drying the solution such that a sheet temperature reached 80 °C. The organic resin 111 of the surface coating layer 107 accounted for 30 mass% (ZnO: 70 mass%). For Sample Nos. E24 and E25, the surface coating layer 107 was formed not on the intermediate coating layer 105 but directly on the Al-plating layer 103 in the same manner.

Sample Al-plated steel sheets 100 were thus produced. It should be noted that the solution for forming the surface coating layer 107 shown in Table 13 was prepared by blending a commercially available reagent with distilled water. It should also be noted that the term "Zn Coating Weight" in Table 13 means a metallic-zinc-mass equivalent (unit: g/m²) of a total amount of coating of the ZnO particles 109 per square meter of the intermediate coating layer 105.

It should be noted that a blank in Table 13 means that no intermediate coating layer 105 was formed.

### Measurement Conditions

The particle size of the ZnO particles 109 and the ZnO coating weight were identified as follows.

### 1. Particle Size of ZnO Particles 109

The ZnO particles 109 were observed at 2000-fold magnification with a scanning electron microscope manufactured by JEOL Ltd. (trade name: JSM-7800F) and respective maximum particle sizes of 20 of the ZnO particles 109 were measured and averaged. The average value was defined as the particle size of the ZnO particles 109.

### 2. ZnO Coating Weight

The ZnO coating weight was measured with an X-ray fluorescence analyzer manufactured by Rigaku Corporation (trade name: ZSX Primus) under the following conditions. For the measurement, a calibration curve was created in advance that represented a relationship between ZnO coating weight and intensity of X-ray fluorescence in terms of metallic zinc and the amount of coating was determined with reference to the calibration curve.
- measurement diameter: 30 mm
- measurement atmosphere: vacuum
- spectrum: Zn-Ka

The number of counted peaks of Zn-Ka of X-ray fluorescence analysis measured under the above conditions was referred to.

**Table 13**

| Sample No. | intermediate coating layer 105 | | | | surface coating layer 107 | | | | |
|---|---|---|---|---|---|---|---|---|---|
| | | | | | ZnO 109 | | organic resin 111 | | |
| | type of ceramics | type of mixed gas | temp/°C | thickness (nm) | mean particle size of ZnO (*µ*m) | Zn coating weight (g/m²) | resin species | ratio (mass%) | |
| E1 | Al₂O₃ | AlCl₃, CO₂, CO, H₂ | 1000 | 7 | 1 | 1.5 | cationic urethane resin | 30 | Comp. |
| E2 | Al₂O₃ | AlCl₃, CO₂, CO, H₂ | 1000 | 10 | 1 | 1.5 | cationic urethane resin | 30 | Ex. |
| E3 | Al₂O₃ | AlCl₃, CO₂, CO, H₂ | 1000 | 20 | 1 | 1.5 | cationic urethane resin | 30 | Ex. |
| E4 | Al₂O₃ | AlCl₃, CO₂, CO, H₂ | 1000 | 100 | 1 | 1.5 | cationic urethane resin | 30 | Ex. |
| E5 | Al₂O₃ | AlCl₃, CO₂, CO, H₂ | 1000 | 500 | 1 | 1.5 | cationic urethane resin | 30 | Ex. |
| E6 | Al₂O₃ | AlCl₃, CO₂, CO, H₂ | 1000 | 1000 | 1 | 1.5 | cationic urethane resin | 30 | Ex. |
| E7 | Al₂O₃ | AlCl₃, CO₂, CO, H₂ | 1000 | 1100 | 1 | 1.5 | cationic urethane resin | 30 | Comp. |
| E8 | ZrO₂ | Zr(C₁₁H₁₉O₂)₄, H₂O, N₂ | 800 | 100 | 1 | 1.5 | cationic urethane resin | 30 | Ex. |
| E9 | TiO₂ | TiCl₄, O₂, CO₂, H₂ | 400 | 100 | 1 | 1.5 | cationic urethane resin | 30 | Ex. |
| E10 | SiO₂ | SiCl₄, O₂, H₂ | 400 | 100 | 1 | 1.5 | cationic urethane resin | 30 | Ex. |
| E11 | AlN | AlCl₃, N₂, H₂ | 1000 | 100 | 1 | 1.5 | cationic urethane resin | 30 | Ex. |
| E12 | TiN | TiCl₄, N₂, H₂ | 1050 | 100 | 1 | 1.5 | cationic urethane resin | 30 | Ex. |
| E13 | Si₃N₄ | SiCl₄, NH₃, H₂ | 1000 | 100 | 1 | 1.5 | cationic urethane resin | 30 | Ex. |
| E14 | TiC | TiCl₄, CH₄, H₂ | 1050 | 100 | 1 | 1.5 | cationic urethane resin | 30 | Ex. |
| E15 | SiC | SiCl₄, C₃H₈, H₂ | 1200 | 100 | 1 | 1.5 | cationic urethane resin | 30 | Ex. |
| E16 | Al₂O₃ | AlCl₃, CO₂, CO, H₂ | 1000 | 100 | 1 | 0.5 | cationic urethane resin | 30 | Ex. |
| E17 | Al₂O₃ | AlCl₃, CO₂, CO, H₂ | 1000 | 100 | 1 | 10 | cationic urethane resin | 30 | Ex. |
| E18 | Al₂O₃ | AlCl₃, CO₂, CO, H₂ | 1000 | 100 | 1 | 0.3 | cationic urethane resin | 30 | Comp. |
| E19 | Al₂O₃ | AlCl₃, CO₂, CO, H₂ | 1000 | 100 | 1 | 13 | cationic urethane resin | 30 | Comp. |
| E20 | Al₂O₃ | AlCl₃, CO₂, CO, H₂ | 1000 | 100 | 0.1 | 1.5 | cationic urethane resin | 30 | Ex. |
| E21 | Al₂O₃ | AlCl₃, CO_{2,} CO, H₂ | 1000 | 100 | 5 | 1.5 | cationic urethane resin | 30 | Ex. |
| E22 | Al₂O₃ | AlCl₃, CO₂, CO, H₂ | 1000 | 100 | 0.06 | 1.5 | cationic urethane resin | 30 | Comp. |
| E23 | Al₂O₃ | AlCl₃, CO₂, CO, H₂ | 1000 | 100 | 8 | 1.5 | cationic urethane resin | 30 | Comp. |
| E24 | - | - | - | - | 1 | 1.5 | cationic urethane resin | 30 | Comp. |
| E25 | - | - | - | - | 1 | 10 | cationic urethane resin | 30 | Comp. |
| E26 | Al₂O₃ | - | atmospheric oxidation (300°C × 24 hrs) | 500 | 1 | 1.5 | cationic urethane resin | 30 | Comp. |

Regarding a coating structure, the presence of base / plating layer / intermediate coating layer / surface coating layer was confirmed by SEM cross section observation, while the components was identified by SEM-EDS.

Next, the sample steel sheets produced as described above were evaluated by the following methods in terms of a variety of properties.

### (1) Lubricity of Hot Working (Lubricity)

For evaluation of lubicity of hot working, each sample steel sheet was subjected to a hot mold-pulling test. Each 30 mm × 350 mm sample steel sheet was put in a furnace and heated at 900 °C for 6 minutes while sandwiched between two SiC plates (60 mm width × 200 mm length × 30 mm thickness) and taken out of the furnace. A flat dice (width: 50 mm width × length: 40 mm) of SKD11 was then pressed against opposite surfaces of the steel sheet at approximately 700 °C for a pulling process. The steel sheet was sandwiched between by the SiC plates at both sides thereof with supply of oxygen through the surfaces being sufficiently cut in order to simulate the situation where the ZnO metallic coating disappeared at the stacked portion in contact with the conveyor under more severer conditions. A pressing load and a pulling load were measured and a value calculated by pulling load/(2 × pressing load) was defined as a friction coefficient for hot working. It should be noted that a smaller kinematic friction coefficient means a higher lubicity of hot working, and a kinematic friction coefficient of less than 0.52 is evaluated to pass in Table 14.

### (2) Corrosion Resistance of Painted Steel

Each 120 mm × 200 mm sample steel sheet was put in a furnace and placed on an in-furnace SiC pedestal with an evaluation surface of the steel sheet in contact with the pedestal. The steel sheet was then heated in the furnace at 900 °C for 6 minutes with a SUS304 block (50 mm × 50 mm ×70 mm) having been heated to 900 °C placed thereon. Immediately after taken out of the furnace, the steel sheet was sandwiched between a stainless steel mold for rapid cooling. The cooling rate was approximately 150 °C/sec. Next, each steel sheet having been cooled was cut from a center thereof into a 70 mm × 150 mm piece. After subjected to a chemical conversion treatment with a chemical conversion solution (PB-SX35) manufactured by Nihon Parkerizing Co., Ltd., the piece was coated with a electrodeposition paint (POWERNICS 110) manufactured by Nippon Paint Co., Ltd. such that a thickness of the piece reached 20 µm, and burnt at 170 °C. It should be noted that each 70 mm × 150 mm steel sheet with a thermocouple welded thereto was put in an air atmosphere furnace whose temperature was set to 900 °C, and a temperature of the steel sheet was measured until it reached 900 °C to calculate an averate heating rate. The averate heating rate was 5 °C/sec.

Evaluation of corrosion resistance of painted steel was performed by a method in accordance with JASO M609 instituted by Society of Automotive Engineers of Japan, Inc. Specifically, a film was cross-cut in advance with a box-cutter, and a width (maximum value on one side) of blistering of the film from the cross cut was measured after the elapse of 180 cycles of a corrosion test (60 days). A smaller width of blistering of the film means a higher corrosion resistance and a width equal to or less than 5 mm is evaluated to pass in Table 14.

### (3) Spot Weldability

Spot weldability was evaluated as follows.

The prepared sample steel sheets were each put in a furnace and heated therein at 900 °C for 6 minutes. The sample steel sheets were then each sandwiched by a stainless steel mold for rapid cooling immediately after taken out of the furnace. The cooling rate was approximately 150 °C/sec. Each cooled steel sheet was cut into a 30 × 50 mm piece for measurement of a suitable current range for spot welding (maximum current to minimum current). The measurement conditions were as follows. A current value achieving a nugget diameter of 3 × (t)^{0.5} was defined as the minimum current, whereas a current causing expulsion was defined as the maximum current.
current: DC
electrode: made of chrome copper, DR (40R/6-mm-diameter tip end)
compression: 400 kgf (1kgf = 9.8N)
power supply time: 240 milliseconds

In Table 14, a value of 1.0 kA or more was evaluated to pass.

### (4) Disappearance Test of ZnO

Each sample steel sheet was punched into a diameter of 30 mm, and stacked on a 70 mm × 70 mm in-furnace SiC pedestal while a 50 mm × 50 mm × 70 mm SUS304 block having been heated to 900 °C was placed thereon. The steel sheet in this state was then heated in a furnace at 900 °C for 6 minutes, and sandwiched by a stainless steel mold for rapid cooling immediately after taken out of the furnace. Values of Zn coating weight before and after the heating were measured with XRF. The Zn coating weight was measured in terms of Zn and a ratio of residual amount of ZnO was calculated in terms of Zn.

A sample with a Zn residual ratio of 75% or more and a residual amount of Zn of 0.40 g/m² or more is evaluated to pass in Table 14.

As is understood from Table 14, it has been found that all the Al-plated steel sheets 100 (Examples) within the scope of the invention achieved good results of all the four evaluations (the variety of properties and disappearance test of ZnO), where: the intermediate coating layer 105 formed on the surface of the Al-plating layer 103 was a ceramics vapor deposited film of any one of Al₂O₃, ZrO₂, TiO₂, SiO₂, AIN, TiN, Si₃N₄, TiC, and SiC and had a thickness in a range of 10 nm or more and 1000 nm or less; the surface coating layer 107 formed on the surface of the intermediate coating layer 105 contained the ZnO particles 109 with a mean particle size in a range of 0.10 µm or more and 5.00 µm or less and the organic resin 111; and the amount of coating of the ZnO particles 109 was in a range of 0.5 g/m² or more and 10.0 g/m² or less in terms of metallic zinc.

**Table 14**

| Sample No. | evaluation test | | | | | |
|---|---|---|---|---|---|---|
| | lubricity for hot working | corrosion resistance of painted steel | weldability | ZnO Disappearance Test | | |
| | | | | ratio of residual amount of Zn (unit area%) | residual amount of Zn (g/m²) | |
| E1 | 0.64 | 7.0 | 2.8 | 13 | 0.20 | Comp. |
| E2 | 0.50 | 2.5 | 2.1 | 85 | 1.28 | Ex. |
| E3 | 0.48 | 2.4 | 2.1 | 90 | 1.35 | Ex. |
| E4 | 0.47 | 2.3 | 2.1 | 92 | 1.38 | Ex. |
| E5 | 0.48 | 2.4 | 1.5 | 93 | 1.40 | Ex. |
| E6 | 0.51 | 2.4 | 1.1 | 93 | 1.40 | Ex. |
| E7 | 0.47 | 2.5 | 0.9 | 93 | 1.40 | Comp. |
| E8 | 0.47 | 2.3 | 2.1 | 92 | 1.38 | Ex. |
| E9 | 0.47 | 2.3 | 2.1 | 90 | 1.35 | Ex. |
| E10 | 0.47 | 2.4 | 2.1 | 88 | 1.32 | Ex. |
| E11 | 0.48 | 2.4 | 2.2 | 86 | 1.29 | Ex. |
| E12 | 0.47 | 2.4 | 2.1 | 88 | 1.32 | Ex. |
| E13 | 0.48 | 2.5 | 2.2 | 85 | 1.28 | Ex. |
| E14 | 0.47 | 2.4 | 2.1 | 87 | 1.31 | Ex. |
| E15 | 0.48 | 2.5 | 2.1 | 85 | 1.28 | Ex. |
| E16 | 0.51 | 4.5 | 2.1 | 92 | 0.46 | Ex. |
| E17 | 0.47 | 2.1 | 1.3 | 92 | 9.20 | Ex. |
| E18 | 0.59 | 7.1 | 2.3 | 92 | 0.28 | Comp. |
| E19 | 0.46 | 2.0 | 0.6 | 92 | 11.96 | Comp. |
| E20 | 0.47 | 2.3 | 2.1 | 92 | 1.38 | Ex. |
| E21 | 0.47 | 2.3 | 2.1 | 92 | 1.38 | Ex. |
| E22 | 0.57 | 2.4 | 2.2 | 92 | 1.38 | Comp. |
| E23 | 0.47 | 2.3 | 0.5 | 92 | 1.38 | Comp. |
| E24 | 0.68 | 8.0 | 2.8 | 3 | 0.05 | Comp. |
| E25 | 0.55 | 7.2 | 2.5 | 2.5 | 0.25 | Comp. |
| E26 | 0.65 | 7.8 | 2.5 | 10 | 0.15 | Comp. |

Meanwhile, in Sample Nos. E1, E7, E18, E19, and E22 to E26, the intermediate coating layer 105 was not formed, the intermediate coating layer 105 was not a vapor deposited film, the intermediate coating layer 105 had an inappropriate thickness, or the mean particle size of the ZnO particles 109, the amount of coating of the ZnO particles 109 or the like was out of the predetermined range according to the invention. It has been found that none of the Al-plated steel sheets (Sample Nos. E1, E7, E18, E19, and E22 to E26) out of the scope of the invention achieved a good result of at least one of the above four evaluations (the variety of properties and the disappearance test of ZnO).

### EXPLANATION OF CODE(S)

- 100: Al-plated steel sheet
- 101: base
- 103: Al-plating layer
- 105: intermediate coating layer
- 107: surface coating layer
- 109: ZnO particles
- 111: organic resin

## Claims

1. An Al-plated steel sheet comprising:
a base;
an Al-plating layer formed on at least one of opposite surfaces of the base;
an intermediate coating layer formed on a surface of the Al-plating layer; and
a surface coating layer formed on a surface of the intermediate coating layer, the surface coating layer comprising ZnO particles with a mean particle size in a range of 0.10 µm or more and 5.00 µm or less, and an organic resin such that an amount of coating of the ZnO particles is in a range of 0.5 g/m² or more and 10.0 g/m² or less in terms of metallic zinc, wherein the intermediate coating layer satisfies one of conditions (A) to (C) below:
(A) the intermediate coating layer has a thickness in a range of 10 nm or more and 1000 nm or less, and consists mainly of S, Al and O with a mass ratio [S]/[Al] of S to Al being in a range of 0.0008 or more and 0.49 or less, and a mass ratio [S]/[O] of S to O being in a range of 0.001 or more and 0.55 or less;
(B) the intermediate coating layer comprises an oxoacid salt comprising one of or two or more of borate, silicate, sulfonate, sulfinate, permanganate, and phosphate and has a deposition thickness in a range of 10 nm or more and 500 nm or less; and
(C) the intermediate coating layer comprises a fluorine salt of at least one of aluminum, alkali metal or alkaline earth metal such that a content of fluorine is 20 mg/m² or more.

2. The Al-plated steel sheet according to claim 1, wherein
the intermediate coating layer satisfies the conditions (A), and
the intermediate coating layer has a thickness in a range of 20 nm or more and 400 nm or less.

3. The Al-plated steel sheet according to claim 1 or 2, wherein
the intermediate coating layer satisfies the conditions (A),
the mass ratio [S]/[Al] of S to Al in the intermediate coating layer is in a range of 0.005 or more and 0.1 or less, and
the mass ratio [S]/[O] of S to O in the intermediate coating layer is in a range of 0.005 or more and 0.12 or less.

4. The Al-plated steel sheet according to any one of claims 1 to 3, wherein
the mass ratio [S]/[Al] of S to Al in the intermediate coating layer is in a range of 0.008 or more and 0.05 or less, and
the mass ratio [S]/[O] of S to O in the intermediate coating layer is in a range of 0.01 or more and 0.08 or less.

5. The Al-plated steel sheet according to claim 1, wherein
the intermediate coating layer satisfies the conditions (B), and
the oxoacid salt is selected one of or two or more of sodium borate, sodium silicate, sodium phosphate, potassium phosphate, lithium phosphate, magnesium phosphate, calcium phosphate, aluminum phosphate, zinc sulfonate, sodium sulfinate, potassium permanganate, zinc orthosilicate, lithium silicate, and zinc permanganate.

6. The Al-plated steel sheet according to claim 1 or 5, wherein
the intermediate coating layer satisfies the conditions (B), and
the oxoacid salt is a mixture of permanganate and silicate, which are mixed at an Mn/Si mass ratio in a range of 1 or more and 50 or less.

7. The Al-plated steel sheet according to claim 1, wherein
the intermediate coating layer satisfies the conditions (C), and
the intermediate coating layer comprises fluorine in an amount of 2000 mg/m² or less.

8. The Al-plated steel sheet according to claim 1 or 7, wherein
the intermediate coating layer satisfies the conditions (C), and
the fluoride salt comprises at least one or two of AlF₃, AIOF, LiF, NaF, KF, MgF₂, and CaF₂.

9. The Al-plated steel sheet according to any one of claims 1 to 8, wherein a three-layered structure comprising the Al-plating layer, the intermediate coating layer, and the surface coating layer is formed on each of the opposite surfaces of the base.

10. The Al-plated steel sheet according to any one of claims 1 to 9, wherein a content of Al in the Al-plating layer is, in mass%, 70% or more.

11. The Al-plated steel sheet according to any one of claims 1 to 10, wherein the base comprises:
in mass%,
C: 0.01% or more and 0.5% or less;
Si: 2.0% or less;
Mn: 0.01% or more and 3.5% or less;
P: 0.1% or less;
S: 0.05% or less;
Al: 0.001% or more and 0.1% or less;
N: 0.01% or less; and
a balance consisting of Fe and inevitable impurities.

12. The Al-plated steel sheet according to claim 11, wherein the base further comprises, in mass%, one of or two or more of:
Ti: 0.005% or more and 0.1% or less;
B: 0.0003% or more and 0.01% or less;
Cr: 0.01% or more and 1.0% or less;
Ni: 0.01% or more and 5.0% or less;
Mo: 0.005% or more and 2.0% or less; and
Cu: 0.005% or more and 1.0% or less.
